# EUROPÄISCHE PATENTSCHRIFT

(11) **EP 3 356 277 B1**
(45) Veröffentlichungstag und Bekanntmachung des Hinweises auf die Patenterteilung: **31.07.2019**
(21) Anmeldenummer: 16775573.5
(22) Anmeldetag: 22.09.2016
(51) Int. Cl.: B66B 23/00

(54) **VERFAHREN ZUM MONTIEREN EINES TRAGWERKS FÜR EINE PERSONENTRANSPORTANLAGE IN EINEM BAUWERK**
METHOD FOR MOUNTING A BEARING STRUCTURE FOR A PERSON TRANSPORT INSTALLATION IN A BUILDING STRUCTURE
PROCÉDÉ DE MONTAGE D'UNE OSSATURE PORTEUSE POUR UNE INSTALLATION DE TRANSPORT DE PERSONNES DANS UN BÂTIMENT

(30) Priorität: 29.09.2015 EP 15187462
(43) Veröffentlichungstag der Anmeldung: 08.08.2018
(73) Patentinhaber: Inventio AG, 6052 Hergiswil (CH)
(72) Erfinder: ILLEDITS, Thomas, 2491 Neufeld an der Leitha (AT); MAKOVEC, Christoph, 2700 Wiener Neustadt (AT); KRAMPL, David, 1100 Wien (AT); SCHULZ, Robert, 1100 Wien (AT); MATHEISL, Michael, 2331 Vösendorf (AT); HAUER, Uwe, 31582 Nienburg (DE)
(86) Internationale Anmeldenummer: PCT/EP2016/072535
(87) Internationale Veröffentlichungsnummer: WO 2017/055163

(56) Entgegenhaltungen:
- WO-A1-2011/073708
- CN-U- 201 942 404
- JP-A- 2006 021 910
- US-A- 4 958 473
- "Huck BOM - The highest strength blind fasteners in the world.", Alcoa Fastening Systems & Rings , 15. April 2015 (2015-04-15), XP055261721, Gefunden im Internet: URL:https://www.alcoa.com/fastening_system s_and_rings/commercial/catalog/pdf/huck/en /AF201_Bom_Brochure.pdf [gefunden am 2016-03-31]
- "Hollo-Bolt - The Original Expansion Bolt for Structural Steel", Lindapter International , 15. Juni 2012 (2012-06-15), XP055261728, Gefunden im Internet: URL:http://www.ancon.com.au/downloads/s3/l 1/hollo-bolt.pdf [gefunden am 2016-03-31]

## Beschreibung

Die vorliegende Erfindung betrifft ein Verfahren zum Montieren eines Tragwerks für eine Personentransportanlage wie zum Beispiel eine Fahrtreppe, einen Fahrsteig etc. in einem Bauwerk.

Personentransportanlagen werden dazu eingesetzt, um Personen beispielsweise in Bauwerken zwischen verschiedenen Höhenniveaus oder innerhalb eines gleichbleibenden Höhenniveaus zu befördern. Beispielsweise werden Fahrtreppen, welche teilweise auch als Rolltreppen bezeichnet werden, dazu eingesetzt, um Personen zum Beispiel in einem Bauwerk von einem Stockwerk zu einem anderen Stockwerk zu befördern. Fahrsteige können dazu eingesetzt werden, Personen zum Beispiel innerhalb eines Stockwerks in einer horizontalen Ebene oder lediglich einer geringfügig geneigten Ebene zu befördern.

Fahrtreppen und Fahrsteige weisen im Allgemeinen eine lasttragende Struktur auf, die als Tragwerk bezeichnet wird. Das Tragwerk ist dabei dazu ausgelegt, beim Befördern von Personen auf die Personentransportanlage wirkende Kräfte, insbesondere Gewichtskräfte, aufzunehmen und beispielsweise an tragende Strukturen des die Personentransportanlage aufnehmenden Bauwerks weiterzuleiten. Zur Lagerung des Tragwerks können hierbei geeignete Auflagerstellen an dem Bauwerk vorgesehen sein. Je nach Ausgestaltung kann sich das Tragwerk hierbei über zwei oder mehrere Ebenen beziehungsweise Stockwerke des Bauwerks und/oder über kürzere oder längere Distanzen innerhalb eines gleichbleibenden Stockwerks innerhalb des Bauwerks erstrecken.

Ein im montierten Zustand an den Auflagerstellen des Bauwerks abgestütztes Tragwerk kann dabei sowohl bewegbar als auch ortsfest angeordnete Komponenten der Personentransportanlage aufnehmen. Je nach Ausgestaltung der Personentransportanlage als Fahrtreppe oder Fahrsteig können solche Komponenten beispielsweise als Stufenband, Palettenband, Umlenkachsen, Antriebswellen, Antriebsmotor, Getriebe, Steuerung, Überwachungssystem, Sicherheitssystem, Balustraden, Kammplatten, Lagerstellen, Laufbahn und/oder Führungsschienen ausgebildet sein.

In der Regel sind Tragwerke für Personentransportanlagen als Fachwerkkonstruktion ausgeführt. Solche Fachwerkkonstruktionen werden herkömmlich bereits beim Hersteller als ganze Einheit oder in mehrere Tragwerkmodule unterteilt hergestellt. Das als komplette Einheit oder in mehrere Module unterteilt vormontierte Tragwerk wird dann in das Bauwerk, in dem die Personentransportanlage installiert werden soll, transportiert und dort montiert.

Ein das Tragwerk bildendes Fachwerk setzt sich im Allgemeinen aus einer Vielzahl von stabförmigen Fachwerkkomponenten zusammen. Um eine ausreichende Stabilität und Lasttragfähigkeit des Tragwerks gewährleisten zu können, müssen die einzelnen Fachwerkkomponenten durch Verbindungen ausreichend hoher Festigkeit miteinander verbunden werden. Herkömmlich werden Fachwerke für Tragwerke oder Tragwerksmodule meist gefertigt, indem üblicherweise eine Vielzahl von Profilstahlelementen unterschiedlicher Querschnittsfläche und Querschnittsform zusammengeschweißt werden.

Aus der WO 2013/029979 A1 sind Ausführungsformen von Fahrtreppen und Fahrsteigen mit einem geschweißten Tragwerk sowie einem Untersichtblech bekannt.

Als Alternative zu durch Verschweißen von Fachwerkkomponenten hergestellten Tragwerken oder Tragwerksmodulen ist in der WO 2011/073708 A1 ein schweißnahtfreies Fachwerk mit Stäben und verschraubbaren Knoten beschrieben. Die JP 2006 021910 A offenbart als weitere Verbindungsmöglichkeit ein Tragwerk, dessen Tragwerkmodule mittels Spreizhülsen miteinander verbunden sind.

Es kann unter anderem ein Bedarf an einem Montageverfahren für ein Tragwerk für eine Personentransportanlage in einem Bauwerk bestehen, welches erlaubt, ein solches Tragwerk einfach, kostengünstig und/oder mit hoher Präzision innerhalb eines Bauwerks zusammen zu bauen und zu montieren. Insbesondere kann ein Bedarf an einem Montageverfahren für ein Tragwerk für eine Personentransportanlage bestehen, welches ermöglicht, das Tragwerk vor Ort innerhalb eines Bauwerks nahe einer Position, an der die Personentransportanlage installiert werden soll, zusammen zu bauen und dort zu montieren.

Einem solchen Bedarf kann mit einem Montageverfahren gemäß dem unabhängigen Patentanspruch entsprochen werden. Vorteilhafte Ausführungsformen des Montageverfahrens sind sowohl in den abhängigen Ansprüchen als auch in der nachfolgenden Beschreibung erläutert.

Gemäß einem ersten Aspekt der vorliegenden Erfindung wird ein Verfahren gemäß Anspruch 1 zum Montieren eines Tragwerks für eine Personentransportanlage in einem Bauwerk vorgeschlagen. Das Tragwerk weist dabei ein Fachwerk aus miteinander verbundenen lasttragenden Fachwerkkomponenten einschließlich Obergurten, Untergurten, Querstreben, Diagonalstreben und Stehern auf. Das Verfahren weist zumindest die folgenden Schritte, vorzugsweise in der angegebenen Reihenfolge auf: Es werden zunächst mehrere einzelne Fachwerkkomponenten mit darin ausgebildeten Verbindungsöffnungen bereitgestellt und an eine Montageposition innerhalb des Bauwerks eingebracht. Dann wird das Fachwerk durch Verbinden der Fachwerkkomponenten miteinander mittels lasttragender Verbinderkomponenten an oder nahe der Montageposition innerhalb des Bauwerks zusammengebaut, indem jeweils eine Verbinderkomponente durch angrenzend aneinander angeordnete Verbindungsöffnungen wenigstens zweier benachbarter Fachwerkkomponenten hindurchgreifend angeordnet wird und dann hinsichtlich ihrer Außengeometrie verformt wird. Die Verbinderkomponenten sind hierbei derart ausgebildet und werden beim Verbinden von Fachwerkkomponenten derart verformt, dass sie die von ihnen durchgriffenen Verbindungsöffnungen nach dem Verbinden der Fachwerkkomponenten vollständig und spielfrei ausfüllen und die Fachwerkkomponenten in allen Raumrichtungen formschlüssig miteinander verbinden und die Fachwerkkomponenten beim Verbinden der Fachwerkkomponenten relativ zueinander positionieren. Abschließend wird das zusammengebaute Fachwerk an vorbereiteten Montagestellen des Bauwerks innerhalb des Bauwerks montiert.

Ohne den anspruchsgemäßen Umfang der Erfindung in irgendeiner Weise einzuschränken, können mögliche Merkmale und Vorteile von Ausführungsformen der Erfindung unter anderem als auf nachfolgend beschriebenen Ideen und Erkenntnissen beruhend angesehen werden.

Wie einleitend kurz angedeutet, wurden Fachwerkkonstruktionen für Tragwerke einer Personentransportanlage bisher meist durch Verschweißen von geeignet ausgebildeten Fachwerkkomponenten hergestellt. Ein Verschweißen einer Vielzahl von Fachwerkkomponenten untereinander erfordert dabei einen hohen Zeit- und Arbeitsaufwand. Da es sich bei dem Tragwerk um ein sicherheitsrelevantes Bauteil handelt, dürfen hierbei eingesetzte Schweißnähte im Regelfall nur durch gut ausgebildete, staatlich zertifizierte Fachleute ausgeführt werden. Ferner sind im Allgemeinen zur Fertigung solcher verschweißter Konstruktionen große Lehren notwendig und durch eine Wärmeeinwirkung beim Schweißen ist üblicherweise ein Richten des fertigen Bauteils erforderlich. Ferner kann für einen Transport eines bei einem Hersteller vorgefertigten gesamten Tragwerks oder einzelner Tragwerksmodule hin zu einem Bauwerk und in das Bauwerk hinein, in dem die Personentransportanlage installiert werden soll, ein erheblicher Aufwand nötig sein und somit erhebliche Kosten entstehen.

Bei dem als Alternative zu verschweißten Fachwerken beschriebenen schweißnahtfreien Fachwerk, wie es beispielsweise in der WO 2011/073708 A1 dargestellt wurde, werden Fachwerkkomponenten-bildende Stäbe mithilfe verschraubbarer Knoten miteinander verbunden. Damit soll ein möglichst verzugfreies Fachwerk hergestellt werden können. Das offenbarte Fachwerk muss jedoch aufwändig mithilfe von Lehren aufgebaut werden, da die einzelnen Verbindungselemente in einer Ebene aufgrund von vorhandenem Spiel zu viele Freiheitsgrade aufweisen. Ferner kann befürchtet werden, dass die Verbindungselemente ein Sicherheitsrisiko darstellen, da sich die hierbei eingesetzten Schrauben von Klemmelementen lösen können. Zudem ist davon auszugehen, dass die Verbindung der einzelnen Fachwerkkomponenten zumindest bezüglich eines Freiheitsgrades lediglich kraftschlüssig ist, so dass sich beispielsweise durch seitliche Krafteinwirkung das gesamte Fachwerk verziehen könnte.

Bei dem hierin vorgeschlagenen Verfahren zum Montieren eines Tragwerks für eine Personentransportanlage sollen ein Fachwerk bildende lasttragende Fachwerkkomponenten, ähnlich wie bei dem zuletzt genannten Stand der Technik, ohne Schweißverbindungen oder zumindest ohne einen überwiegenden Anteil der auf das Fachwerk wirkenden Last tragende Schweißverbindungen miteinander verbunden werden.

Zu diesem Zweck soll eine spezielle Art der mechanischen Verbindung zweier oder mehrerer Fachwerkkomponenten untereinander eingesetzt werden. Die spezielle Art und Eigenschaften dieser Verbindungen resultiert hauptsächlich aus den hierfür eingesetzten Verbinderkomponenten. Diese Verbinderkomponenten sollen einerseits eine ausreichende mechanische Stabilität aufweisen, so dass sie die auf das Fachwerk wirkenden Kräfte und Lasten zumindest zu einem überwiegenden Teil aufnehmen können, das heißt die Verbinderkomponenten sollen lasttragend ausgestaltet sein. Insbesondere sollen die Verbinderkomponenten derart lasttragend ausgestaltet sein, dass sie vorzugsweise zumindest den gleichen Lasten standhalten können, wie die durch sie verbundenen Fachwerkkomponenten. Andererseits sollen die Verbinderkomponenten derart ausgestaltet sein und montiert werden können, dass sie während des Verbindens zweier oder mehrerer Fachwerkkomponenten diese in einer vorbestimmbaren Weise relativ zueinander positionieren.

Um die Fachwerkkomponenten zu einem Fachwerk verbinden zu können, ist jede der Fachwerkkomponenten mit Verbindungsöffnungen ausgestattet. Diese Verbindungsöffnungen können als Durchgangsöffnungen beziehungsweise Löcher in der jeweiligen Fachwerkkomponente ausgebildet sein. Vorzugsweise sind die Verbindungsöffnungen rotationssymmetrisch, insbesondere mit rundem beziehungsweise kreisförmigem Querschnitt. Eine Querschnittsfläche der Verbindungsöffnungen kann beispielsweise zwischen 0,1 cm² und 20 cm² betragen, was bei kreisförmigen Verbindungsöffnungen einem Durchmesser von etwa zwischen 4mm und 50mm entspricht. Vorzugsweise sind alle in den verschiedenen Fachwerkkomponenten vorgesehenen Verbindungsöffnungen gleich ausgestaltet, insbesondere mit gleicher Querschnittsfläche und gleicher Kontur. In einer Fachwerkkomponente sind dabei im Allgemeinen wenigstens zwei Verbindungsöffnungen, beispielsweise nahe entgegengesetzten Enden der Fachwerkkomponente, ausgebildet.

Während eines Zusammenbauens und Montierens des Tragwerks können die einzelnen Fachwerkkomponenten mittels der bereits genannten lasttragenden und positionierend wirkenden Verbinderkomponenten untereinander verbunden werden. Hierzu können zwei oder mehrere Fachwerkkomponenten derart relativ zueinander angeordnet werden, dass zwei ihrer in ihnen ausgebildeter Verbindungsöffnungen angrenzend aneinander zu liegen kommen und vorzugsweise miteinander fluchten. Eine Verbinderkomponente kann dann durch derart angrenzend aneinander angeordnete Verbindungsöffnungen hindurchgreifend angeordnet werden. Nachdem die Verbinder Komponente derart positioniert wurde, wird sie in einer Weise verformt, dass sich ihre Außengeometrie ändert. Die hierfür eingesetzten Verbinderkomponenten sind dabei speziell dazu ausgebildet, dass sie nach einer Montage, das heißt nach dem Verformen der jeweiligen Verbinderkomponente und somit in einem wenigstens zwei Fachwerkkomponenten verbindenden Zustand, die von ihnen durchgriffenen Verbindungsöffnungen der zu verbindenden Fachwerkkomponenten vollständig und spielfrei ausfüllen.

Unter einem vollständigen und spielfreien Ausfüllen der Verbindungsöffnungen kann dabei verstanden werden, dass Außenoberflächen der Verbinderkomponenten sich während der Montage derart an Oberflächen der Fachwerkkomponenten, insbesondere an Oberflächen, welche eine Innenberandung der Verbindungsöffnungen bilden, anlegen beziehungsweise anschmiegen, dass die Verbinderkomponenten an den Fachwerkkomponenten und insbesondere in deren Verbindungsöffnungen in allen Raumrichtungen spielfrei gehalten sind.

Unter "spielfrei" soll hierbei verstanden werden, dass sich die miteinander verbundenen Fachwerkkomponenten aufgrund eines durch die Verbinderkomponente bewirkten Formschlusses vorzugsweise in keiner Richtung relativ zueinander bewegen können, sich zumindest jedoch um weniger als 0,3mm, vorzugsweise weniger als 0,1mm oder stärker bevorzugt weniger als 0,03mm relativ zueinander bewegen können. Mit anderen Worten sollen die Verbinderkomponenten derart ausgestaltet sein und montiert werden, dass sie die zu verbindenden Fachwerkkomponenten durch einen Formschluss in allen Raumrichtungen verbinden. Der Formschluss soll hierbei unter anderem auch in Richtungen innerhalb einer durch die Fachwerkkomponenten gebildeten Ebene wirken, das heißt in Richtungen senkrecht zu einer Längserstreckungsrichtung einer länglich ausgebildeten Verbinderkomponente.

In dieser Hinsicht unterscheiden sich die für die Montage des hierin vorgeschlagenen Tragwerks einzusetzenden Verbinderkomponenten von einfachen, herkömmlich für Fachwerke eingesetzten Verbinderkomponenten wie zum Beispiel Verschraubungen oder klassischen Vernietungen. Solche Verschraubungen oder herkömmlichen Vernietungen bewirken meist lediglich einen Formschluss entlang einer Längsrichtung der Verbinderkomponente, wohingegen die miteinander verbundenen Fachwerkkomponenten in Richtungen quer zu dieser Längsrichtung lediglich kraftschlüssig verbunden sind. Insbesondere weisen Verschraubungen oder Vernietungen, wie beispielsweise Nietverbindungen mit warm oder kalt angeformten Schließköpfen innerhalb der durch sie durchgriffenen Verbindungsöffnungen stets ein gewisses seitliches Spiel auf.

Gemäß einer Ausführungsform sind die Verbinderkomponenten derart ausgebildet und werden während des Verbindens der Fachwerkkomponenten derart in ihrer Außengeometrie verformt, dass sie beim Verbinden wenigstens zweier benachbarter Fachwerkkomponenten an einer die Verbindungsöffnungen durchgreifenden Mantelfläche derart aufgeweitet werden können, dass sie die Verbindungsöffnungen vollständig und spielfrei ausfüllen und dabei die aufgeweitete Mantelfläche einen in radialer Richtung nach außen wirkenden Druck auf Innenränder der Verbindungsöffnungen ausübt.

Mit anderen Worten sollen die Verbinderkomponenten vorzugsweise derart ausgestaltet sein, dass sie eine Mantelfläche aufweisen, die derart dimensioniert ist, dass sie durch angrenzend aneinander angeordnete Verbindungsöffnungen zweier benachbarter Fachwerkkomponenten problemlos, das heißt mit einem gewissen Spiel, hindurchgesteckt werden können. Anschließend sollen die Verbinderkomponenten beim weiteren Montieren derart verformt werden können, dass die durch die Verbindungsöffnungen hindurchgreifende Mantelfläche radial aufgeweitet wird. Mit anderen Worten soll ein sich in den Verbindungsöffnungen befindender Teil der Verbinderkomponenten sich während des Montierens bezüglich seiner Querschnittsfläche vergrößern lassen, vorzugsweise durch eine möglichst weitestgehend plastische Verformung. Durch ein solches Aufweiten der Mantelfläche der Verbinderkomponente kann diese die Verbindungsöffnungen im fertig montierten Zustand vollständig und spielfrei ausfüllen, das heißt die Mantelfläche kann vorzugsweise über ihren gesamten Umfang hin vollständig und spielfrei an einer innen liegenden Berandungsfläche der Verbindungsöffnungen anliegen. Dabei soll die Mantelfläche während des Montagevorgangs so stark aufgeweitet werden, dass sie in radialer Richtung sogar einen gewissen Druck nach außen auf Innenränder der Verbindungsöffnungen ausübt. Dieser Druck kann z.B. aus einer permanenten elastischen Verformung der Mantelfläche und/oder der Ränder der Verbindungsöffnungen herrühren.

Anders ausgedrückt soll die fertig montierte Verbinderkomponente in Presspassung in die zugehörige Verbindungsöffnung eingepasst sein.

Durch ein solches während des Montierens der Verbinderkomponenten bewirktes vollständiges und spielfreies Ausfüllen der Verbindungsöffnungen benachbart zueinander angeordneter Fachwerkkomponenten werden diese nicht nur einerseits in allen Raumrichtungen formschlüssig miteinander verbunden, sondern der spezielle Montagevorgang bringt auch mit sich, dass die Fachwerkkomponenten aufgrund der bewirkten Presspassung relativ zueinander sehr präzise positioniert werden. Wie weiter unten noch detaillierter beschrieben, kann dies sehr wichtig für ein Zusammenbauen des Tragwerks sowie für das daraus resultierende Tragwerk sein.

Gemäß einer Ausführungsform sind die Verbinderkomponenten Niete, insbesondere hochfeste Blindnietbolzen. Alternativ können die Verbinderkomponenten mit einer Hülse und wenigstens einem in der Hülse aufgenommenen und relativ zu der Hülse verlagerbaren Konus ausgebildet sein.

Ein Niet ist ein plastisch verformbares, im Regelfall zylindrisches Verbindungselement, mithilfe dessen beispielsweise Blechteile zusammengefügt werden können. Mithilfe eines Niets kann eine in Längsrichtung des Niets formschlüssige Nietverbindung zweier Bauteile hergestellt werden. Niete können typischerweise aus Metallen wie zum Beispiel Stahl, Kupfer, Messing, Aluminiumlegierungen oder Titan oder Ähnlichem, gegebenenfalls auch aus Kunststoffen, hergestellt werden. Generell gibt es viele verschiedene Typen von Nieten wie zum Beispiel Vollnieten, Hohlnieten, Blindnieten, Stanznieten etc., deren Eigenschaften für eine Verwendung in spezifischen Anwendungen angepasst sein können. Im vorliegenden Fall kann es als wesentlich erachtet werden, dass ein Niet sich beim Montieren derart in von ihm durchgriffene Verbindungsöffnungen zu verbindender Bauteile einfügt, dass er diese zumindest nach Abschluss des Montagevorgangs vollständig und spielfrei ausfüllt, indem während des Montagevorgangs beispielsweise seine Mantelfläche geeignet aufgeweitet wird.

Bei Blindnietbolzen handelt es sich um eine spezielle Form eines Hohlniets, die nur einen Zugang zu einer Seite zu verbindender Bauteile erfordert und typischerweise mit einer speziellen Blindnietzange montiert wird. Im Regelfall besteht ein Blindnietbolzen neben einem hohlen Nietkörper mit Kopf an der Vorderseite aus einem längeren, durchgesteckten Dorn mit Kopf am hinteren Nietende, der mit einer Sollbruchstelle versehen ist.

Ein spezieller, für die Herstellung eines hierin beschriebenen Tragwerks als besonders geeignet erachteter hochfester Blindnietbolzen wird von der Firma Alcoa Fastening Systems & Rings unter dem Namen Huck BOM® vertrieben. Grundprinzipien eines solchen Blindnietbolzens wurden bereits in US 2,527,307 beschrieben. Dabei ist auch angegeben, dass beim Montieren eines solchen Blindnietbolzens ein hülsenartiger Schaft, der zuvor in Verbindungsöffnungen zweier zu verbindender Bauteile eingeführt wurde, zunächst radial aufgeweitet wird, indem eine sogenannte Schulter, die einen geringfügig breiteren Querschnitt aufweist als ein Innenquerschnitt des Schafts, durch den Schaft hindurchgezogen wird und diesen nach außen hin plastisch verformt, so dass sich die Mantelfläche des Schafts satt an Innenoberflächen der Verbindungsöffnungen anlegt. Erst anschließend werden durch geeignetes plastisches Verformen von Endbereichen des Schafts geeignet ausgebildete Nietköpfe geformt, so dass die zu verbindenden Bauteile durch den fertig montierten Blindnietbolzen in allen Raumrichtungen formschlüssig zueinander fixiert sind.

Alternativ können die Verbinderkomponenten eine Hülse und wenigstens einen in der Hülse aufgenommenen und relativ zu der Hülse verlagerbaren Konus aufweisen. Vorzugsweise können in der Hülse zwei in entgegengesetzte Richtungen verjüngend ausgebildete Konus aufgenommen sein. Zum Montieren einer solchen Verbinderkomponente können der eine Konus beziehungsweise beide Konus relativ zu der Hülse derart verlagert werden, dass die Hülse von innen her nach außen aufgeweitet wird, um von ihr durchgriffene Verbindungsöffnungen vollständig und spielfrei ausfüllen und möglichst eine Presspassung bewirken zu können.

Gemäß einer Ausführungsform sind die Verbinderkomponenten derart ausgebildet und werden beim Montieren derart hinsichtlich ihrer Außengeometrie verformt, dass sie die von ihnen durchgriffenen Verbindungsöffnungen derart vollständig und spielfrei ausfüllen, dass sie die Verbindungsöffnungen mit einer Toleranz von weniger als 0,3mm, vorzugsweise weniger als 0,1mm oder weiter bevorzugt weniger als 0,03mm, relativ zueinander positionieren.

Ferner können die Verbindungsöffnungen vorzugsweise zueinander mit einer Toleranz von weniger als 0,3mm, vorzugsweise weniger als 0,1mm und stärker bevorzugt weniger als 0,03mm, in den Fachwerkkomponenten positioniert eingebracht werden.

Mit anderen Worten sind die Verbindungsöffnungen in den Fachwerkkomponenten räumlich sehr präzise ausgebildet und angeordnet. Die "Toleranz" soll sich dabei sowohl auf die Position, an der eine Verbindungsöffnung in einer Fachwerkkomponente angeordnet ist, als auch auf deren Abmessungen und Konturen beziehen. Durch derart präzise positionierte und ausgebildete Verbindungsöffnungen können dann entsprechend geeignete Verbinderkomponenten hindurchgreifend montiert werden, welche aufgrund ihrer Eigenschaft, die Verbindungsöffnungen nach ihrer Montage vollständig und spielfrei und vorzugsweise presspassend auszufüllen, die Verbindungsöffnungen der zu verbindenden Fachwerkkomponenten ebenfalls mit einer sehr geringen räumlichen Toleranz relativ zueinander positionieren können.

Aufgrund der Positionsgenauigkeit der Verbindungsöffnungen in der Fachwerkkomponente zueinander einerseits und der Positionierungsgenauigkeit der Verbinderkomponenten andererseits kann somit erreicht werden, dass das letztendlich zusammengesetzte Fachwerk aus sehr präzise relativ zueinander positionierten und verbundenen Fachwerkkomponenten aufgebaut ist und somit selbst eine Soll-Geometrie mit sehr geringen Fertigungstoleranzen erreichen kann. Beispielsweise kann ein Fachwerk für ein gesamtes Tragwerk für eine mehrere Meter lange Personentransportanlage mit Fertigungstoleranzen von wenigen Millimetern, oft sogar nur wenigen Zehntel Millimetern, hergestellt werden.

Vorzugsweise können die Verbindungsöffnungen in den Fachwerkkomponenten beispielsweise durch Laserschneiden oder Wasserstrahlschneiden eingebracht werden. Mittels solcher computerunterstützter Bearbeitungsverfahren können Verbindungsöffnungen extrem präzise in solche Bauteile eingebracht werden. Indem hierzu eingesetzte Schneidlaser oder Wasserstrahlvorrichtungen mithilfe eines Computers gesteuert werden, können die Verbindungsöffnungen ferner äußerst reproduzierbar präzise zueinander angeordnet in den Fachwerkkomponenten ausgebildet werden. Damit wird der Zusammenbau des Fachwerks ohne Lehren und mit allen bereits an den Fachwerkkomponenten ausgebildeten Verbindungsöffnungen erst ermöglicht. Der größte Nachteil herkömmlich gefertigter, vernieteter Fachwerkkonstruktionen, dass bei diesen die Verbindungsöffnungen teilweise erst beim Zusammenbau ausgebildet werden können da sie sonst aufgrund der gängigen Fertigungstoleranzen nicht fluchten, wird durch die präzise Anordnung der Verbindungsöffnungen in den Fachwerkkomponenten und durch die Verwendung der dauerhaft präzise positionierenden Verbinderkomponenten eliminiert.

Gemäß einer Ausführungsform werden alle Querstreben, Diagonalstreben und Steher des Fachwerks jeweils baugleich gefertigt. Mit anderen Worten sind die Querstreben eines Fachwerks, die Diagonalstreben des Fachwerks und die Steher des Fachwerks jeweils geometrisch identisch. Solche Fachwerkkomponenten können somit als vorzufertigende Standardteile vorbereitet und gelagert werden und bei Bedarf zum Fertigen eines Tragwerks eingesetzt werden. Solche Standardteile können dabei für Tragwerke unterschiedlicher Geometrie eingesetzt werden, wobei eine individuelle Auslegung des Fachwerks für ein konkretes Tragwerk hauptsächlich aufgrund von auftragsspezifisch zu fertigenden Obergurten und Untergurten und den darin geeignet anzuordnenden und auszubildenden Verbindungsöffnungen erreicht werden kann. Die Ober- und Untergurte können dann durch geeignet vorgefertigte Standardteile in Form von einheitlichen Querstreben, einheitlichen Diagonalstreben und einheitlichen Stehern miteinander verbunden werden und damit das Fachwerk ausgebildet werden.

Gemäß einer Ausführungsform werden die Querstreben, Diagonalstreben und/oder Steher aus Blech beziehungsweise Blechtafeln gefertigt. Solche Blechtafeln können besonders einfach durch Laserschneiden oder Wasserstrahlschneiden in Form gebracht werden, wobei sowohl eine äußere Kontur als auch darin vorzusehende Verbindungsöffnungen sehr präzise ausgebildet werden können.

Gemäß einer Ausführungsform werden die Obergurte und Untergurte auftragsspezifisch konfiguriert und hergestellt. Im Gegensatz zu den verschiedenen Streben und Stehern, welche vorzugsweise als Standardteile in großer Stückzahl vorgefertigt und vorgehalten werden, um sie dann beim Herstellen verschiedenartiger Personentransportanlagen einsetzen zu können, müssen die Obergurte und Untergurte im Regelfall auftragsspezifisch konfiguriert werden. Eine solche Konfiguration kann beispielsweise eine Bemessung der Längen der Obergurte und Untergurte umfassen, welche spezifisch an die Gegebenheiten innerhalb des mit der Personentransportanlage auszustatten Bauwerks zu orientieren sind. Auch eine Bemessung von Querschnitten der Obergurte und Untergurte kann auftragsspezifisch durchzuführen sein, um beispielsweise eine letztendliche Belastbarkeit des Tragwerks an lokale Gegebenheiten und/oder Vorgabebedingungen anzupassen. Die Konfiguration der Obergurte und Untergurte kann dabei auch umfassen, geeignete Positionen für die darin einzubringenden Verbindungsöffnungen zu berechnen, damit die Obergurte und Untergurte mit den Streben und Stehern zu dem gewünschten Fachwerk verbunden werden können.

Die Obergurte und Untergurte können gemäß einer Ausführungsform aus Vierkantrohren gefertigt werden. Eine Verwendung von Vierkantrohren kann für eine ausreichende mechanische Tragfähigkeit der Ober- und Untergurte und letztendlich des gesamten Fachwerks sorgen. In den Vierkantrohren können geeignete Verbindungsöffnungen, gegebenenfalls wieder durch Laserschneiden oder Wasserstrahlschneiden, eingebracht werden.

Gemäß einer Ausführungsform können einzelne Fachwerkkomponenten aus mehreren Teilkomponenten zusammengesetzt werden. Beispielsweise kann ein Steher aus mehreren Teilkomponenten zusammengesetzt werden, wobei jede Teilkomponente beispielsweise ein aus einer Blechtafel präzise geschnittenes Teilblech ist.

Die Teilkomponenten können dabei gegebenenfalls durch eine nicht-lasttragende Schweißverbindung, Clinchverbindung oder Crimpverbindung miteinander verbunden werden. Eine solche Schweiß-, Clinch-, oder Crimpverbindung kann die Teilkomponenten zumindest während eines Zusammenbauens des Fachwerks aneinander halten, so dass das Zusammenbauen einfacher durchgeführt werden kann. Hierbei brauchen die Schweiß-, Clinch-, beziehungsweise Crimpverbindungen jedoch nicht lasttragend sein, das heißt sie müssen nicht den später auf das Tragwerk ausgeübten Kräften standhalten können, sondern lediglich während des Zusammenbauvorgangs des Fachwerks die Teilkomponenten einer Fachwerkkomponente aneinander halten können. Selbstverständlich können diese Verbindungen aber auch lasttragend ausgeführt sein, wenn dies die konkrete Ausgestaltung erfordert.

Gemäß einer Ausführungsform können die Fachwerkkomponenten und/oder die Teilkomponenten von Fachwerkkomponenten durch eine nicht-lasttragende Steckverbindung miteinander verbunden werden. Solche Steckverbindungen können beispielsweise eine Herstellung beziehungsweise Montage des Fachwerks erleichtern und/oder ein Positionieren der Fachwerkkomponenten während der Herstellung beziehungsweise Montage relativ zueinander vereinfachen. Die Fachwerkkomponenten können mithilfe von Steckverbindungen zunächst grob positioniert miteinander verbunden werden beziehungsweise Teilkomponenten einer Fachwerkkomponente können relativ zueinander grob positioniert verbunden werden, bevor dann die Fachwerkkomponenten und gegebenenfalls ihre Teilkomponenten durch ein Verbinden mithilfe der genannten lasttragenden und positionierend wirkenden Verbinderkomponenten letztendlich mechanisch stabil und positionsgenau verbunden werden.

Erfindungsgemäß werden die Fachwerkkomponenten während des Zusammenbauens des Fachwerks in folgender Sequenz miteinander verbunden: zunächst werden H-Rahmen durch Verbinden jeweils zweier Steher mit mindestens einer Querstrebe mittels der Verbinderkomponenten vormontiert. Dann werden die vormontierten H-Rahmen mit den Obergurten und den Untergurten jeweils mittels der Verbinderkomponenten verbunden. Abschließend werden die Diagonalstreben eingefügt und mittels der Verbinderkomponenten verbunden.

Die H-Rahmen sind dabei H-förmige Segmente, bei denen zwei parallel zueinander und vertikal angeordnete Steher durch eine, zwei oder mehrere Querstreben miteinander verbunden sind. Sowohl die einzelnen Fachwerkkomponenten als auch der aus ihnen zusammengesetzte H-Rahmen können hierbei im Regelfall einfach von einer einzelnen Person, zumindest aber von lediglich zwei Personen, gehandhabt und zusammengebaut werden. Hierbei kann vorteilhaft genutzt werden, dass die zum Verbinden der Fachwerkkomponenten eingesetzten Verbinderkomponenten im Regelfall einfach, beispielsweise mit einem mit nur einer Hand betätigten Werkzeug wie einer Nietzange, montiert werden können. Außerdem kann vorteilhaft genutzt werden, dass beim Montieren der Verbinderkomponenten diese die zu verbindenden Fachwerkkomponenten nicht nur durch Bilden eines Formschlusses in allen Richtungen fest miteinander verbinden, sondern die Fachwerkkomponenten gleichzeitig auch aufgrund der positionierenden Eigenschaften der Verbinderkomponenten in einer gewünschten Weise relativ zueinander positioniert werden.

Die derart vormontierten H-Rahmen werden anschließend jeweils mit den Obergurten und den Untergurten verbunden. Auch dies kann von im Regelfall einer einzigen Person, zumindest jedoch von lediglich zwei Personen, einfach bewerkstelligt werden, insbesondere aufgrund der vorteilhaften Eigenschaften der hier zu verwendenden Verbinderkomponenten.

Abschließend können in das derart vorbereitete unvollständige Fachwerk noch die Diagonalstreben eingefügt werden und jeweils mit einigen der bereits vormontierten Fachwerkkomponenten, d.h. beispielsweise mit Ansatzstücken an den Stehern, mithilfe von Verbinderkomponenten verbunden werden. Auch dies kann wiederum von nur einer oder höchstens zwei Personen durchgeführt werden.

Insgesamt kann mit der angegebenen Herstellungssequenz somit das gesamte Fachwerk in einfacher Weise von höchstens zwei Personen zusammengebaut werden. Diese Personen brauchen dabei jeweils lediglich relativ kleine und somit leichte Fachwerkkomponenten oder Segmente, höchstens beispielsweise einen H-Rahmen, handhaben. Aufgrund der vorteilhaften Eigenschaften der zum Verbinden der Fachwerkkomponenten oder Segmente eingesetzten Verbinderkomponenten kann dabei letztendlich einen hochstabiles und gleichzeitig hoch präzise ausgerichtetes Fachwerk als Tragwerk für eine Personentransportanlage hergestellt werden. Zum Zusammenbauen des Fachwerks brauchen die hierzu eingesetzten Personen kein spezielles Fachwissen besitzen. Insbesondere brauchen sie keine zertifizierten Schweißer zu sein.

Gemäß einer Ausführungsform sind die Obergurte und/oder die Untergurte aus mehreren Teilsegmenten zusammenzusetzen, wobei jedes Teilsegment Verbindungsöffnungen aufweist und die Teilsegmente mittels der Verbinderkomponenten verbunden werden.

Mit anderen Worten brauchen die Obergurte bzw. Untergurte nicht als im Regelfall sehr lange, einstückige Bauteile vorgesehen sein, welche schwierig zu transportieren und insbesondere schwierig an einem Montageort innerhalb eines Bauwerks zu bringen wären. Stattdessen können die Obergurte und/oder Untergurte aus mehreren Teilsegmenten hintereinander zusammengesetzt werden, um im zusammengesetzten Zustand ausreichend lange Bauteile zu bilden, welche beispielsweise eine Verbindungsstrecke zwischen zwei verschiedenen Montagestellen innerhalb des Bauwerks überbrücken können. Jedes Teilsegment kann dabei eine verhältnismäßig geringe Länge aufweisen, sodass es einfach beispielsweise von einer einzelnen Person und vorzugsweise ohne spezielle Hilfsmittel gehandhabt und in ein Inneres eines Bauwerks eingebracht werden kann. Die Teilsegmente können dann an oder nahe der Montageposition innerhalb des Bauwerks miteinander verbunden werden. Zum Verbinden der Teilsegmente können dabei vorteilhaft wieder die lasttragenden und positionierend wirkenden Verbinderkomponenten eingesetzt werden, sodass die miteinander verbundenen Teilsegmente sowohl stabil als auch ortsgenau miteinander verbunden werden können und ein Verbinden der Teilsegmente einfach und vorzugsweise von nicht speziell ausgebildetem Personal durchgeführt werden kann.

Gemäß einer Ausführungsform wird ergänzend wenigstens ein Element aus einer Gruppe aufweisend einen Schienenblock, Flanschteile eines Antriebsraums und Flanschteile einer Spannstation durch Verbinden mit Fachwerkkomponenten des Fachwerks mittels der Verbinderkomponenten in die Personentransportanlage eingebaut.

Der Schienenblock, Flanschteile des Antriebsraums und Flanschteile der Spannstation bilden typische Baukomponenten einer Fahrtreppe oder eines Fahrsteigs. Diese Baukomponenten müssen im Allgemeinen in dem Tragwerk der Personentransportanlage aufgenommen und/oder von diesen gehalten werden. Hierzu müssen diese Baukomponenten mechanisch stabil mit dem Fachwerk des Tragwerks verbunden werden. Es wird vorgeschlagen, die genannten Baukomponenten mithilfe der hierin beschriebenen lasttragenden und positionierend wirkenden Verbinderkomponenten mit Fachwerkkomponenten des Fachwerks zu verbinden. Auf diese Weise können die Baukomponenten einfach und positionsgenau in oder an dem Fachwerk montiert werden und die im Betrieb auftretenden auf die Baukomponenten wirkenden Kräfte über den von den Verbinderkomponenten bewirkten Formschluss auf die Fachwerkkomponenten des Tragwerks übertragen werden.

Es wird darauf hingewiesen, dass einige der möglichen Merkmale und Vorteile der Erfindung hierin mit Bezug auf unterschiedliche Ausführungsformen und Ausgestaltungen beschrieben sind. Insbesondere sind mögliche Merkmale und Vorteile der Erfindung teilweise mit Bezug auf Ausgestaltungen eines Tragwerks und teilweise mit Bezug auf Verfahren zum Herstellen eines solchen Tragwerks und/oder Verfahren zum Montieren eines solchen Tragwerks in einem Bauwerk beschrieben. Ein Fachmann wird erkennen, dass die für einzelne Ausführungsformen beziehungsweise Ausgestaltungen beschriebenen Merkmale in geeigneter Weise auf andere Ausführungsformen übertragen werden können und Merkmale in geeigneter Weise kombiniert, angepasst und/oder ausgetauscht werden können, um zu weiteren Ausführungsformen der Erfindung zu gelangen.

Ferner wird darauf hingewiesen, dass die Anmelderin der vorliegenden Anmeldung taggleich mit der vorliegenden Patentanmeldung zwei weitere Patentanmeldungen eingereicht hat mit den Titeln "Verfahren zum Herstellen eines Tragwerks für eine Personentransportanlage" und "Tragwerk für eine Personentransportanlage". In diesen inhaltsähnlichen Anmeldungen sind ergänzend mögliche Merkmale eines Tragwerks, eines Verfahrens zu dessen Herstellung beziehungsweise eines Verfahrens zu dessen Montage dargelegt, wie sie gegebenenfalls analog auch auf die hierin beschriebene Erfindung angewendet werden können.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Figur 1 zeigt ein Tragwerk, wie es gemäß einer Ausführungsform der vorliegenden Erfindung montiert werden kann.
Figuren 2a - 2f veranschaulichen Details des in Figur 1 dargestellten Tragwerks.
Figur 3 veranschaulicht einen Zusammenbau von Fachwerkkomponenten eines erfindungsgemäß montierten Tragwerks.
Figuren 4a, 4b veranschaulichen eine Verbinderkomponente für ein erfindungsgemäß montiertes Tragwerk in verschiedenen Montagestadien.
Figur 5 zeigt eine alternative Verbinderkomponente für ein erfindungsgemäß montiertes Tragwerk.
Figur 6 veranschaulicht zu einem H-Rahmen vormontierte Fachwerkkomponenten für ein erfindungsgemäß montiertes Tragwerk.

Die Figuren sind lediglich schematisch und nicht maßstabsgetreu. Gleiche Bezugszeichen bezeichnen in den verschiedenen Figuren gleiche beziehungsweise gleichwirkende Merkmale.

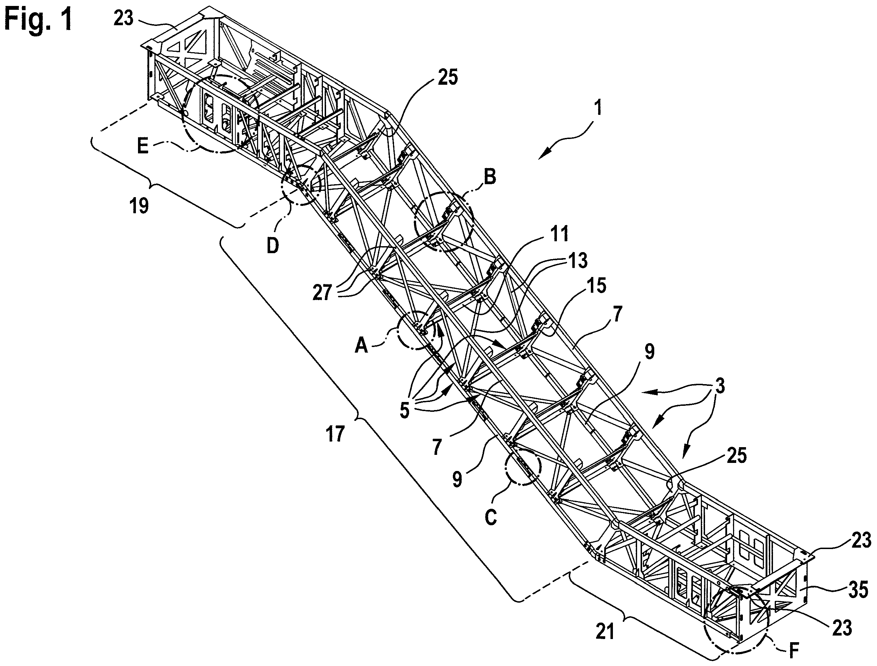

Figur 1 zeigt ein Tragwerk 1 für eine Personentransportanlage. Im dargestellten Beispiel ist das Tragwerk 1 als Fachwerk 3 ausgebildet, das eine lasttragende Struktur für eine Fahrtreppe bilden kann, mithilfe derer Personen zwischen beispielsweise zwei Stockwerken eines Bauwerks befördert werden können.

Das Fachwerk 3 des Tragwerks 1 setzt sich aus einer Vielzahl miteinander durch Verbinderkomponenten 27 verbundener Fachwerkkomponenten 5 zusammen. Dabei bilden einige der Fachwerkkomponenten 5 zueinander parallel verlaufende und sich parallel zu der Erstreckungsrichtung des länglichen Tragwerks 1 erstreckende Obergurte 7 und Untergurte 9. Andere Fachwerkkomponenten 5 bilden quer zu den Ober- und Untergurten 7, 9 verlaufende und diese verbindende Querstreben 11, Diagonalstreben 13 und Steher 15.

Im vorliegenden Ausführungsbeispiel verläuft ein zentraler Bereich 17 des Tragwerks 1 geneigt, wenn er bestimmungsgemäß in einem Bauwerk eingebaut ist. An dessen oberem Ende schließt sich ein horizontal verlaufender ebenfalls fachwerkartig ausgebildeter oberer Endbereich 19 an, der eine obere Landestelle beziehungsweise einen oberen Antrittsbereich des Fahrsteigs tragen kann und in dem beispielsweise ein Schienenblock und/oder ein Antriebsraum untergebracht sein kann. An ein unteres Ende des zentralen Bereichs 17 schließt sich ein weiterer fachwerkartig ausgebildeter unterer Endbereich 21 an, in dem beispielsweise ein weiterer Schienenblock und/oder eine Spannstation aufgenommen sein können.

An dem oberen und dem unteren Endbereich 19, 21 kann das Tragwerk 1 im Bereich eines Fachwerkabschlusses 35 über Auflagewinkel 23 mit tragenden Strukturen eines Bauwerks verbunden und dort aufgelagert werden. An oberen und unteren Übergängen zwischen dem zentralen Bereich 17 und dem oberen Endbereich 19 beziehungsweise dem unteren Endbereich 21 sind in dem Fachwerk 3 sogenannte Winkelsteher 25 vorgesehen, welche die Obergurte 7 und die Untergurte 9 an einem dortigen Knick des Fachwerks 3 miteinander verbinden.

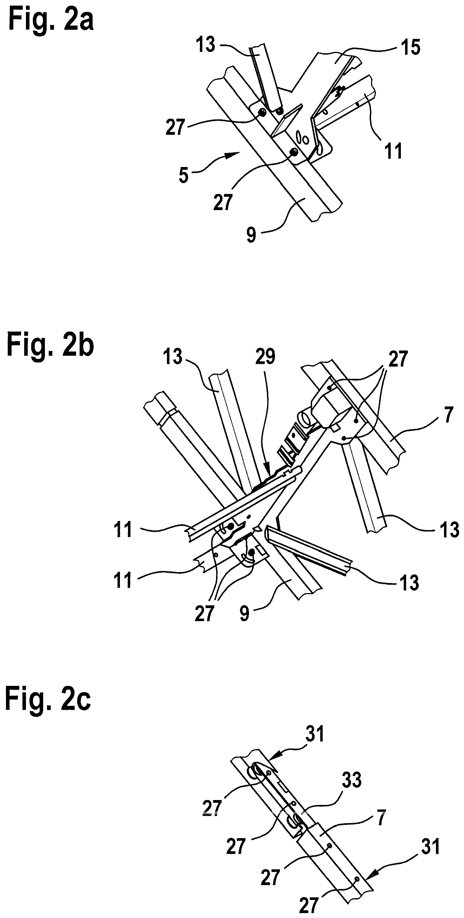

In den Figuren 2a bis 2f sind Details des in Figur 1 dargestellten Tragwerks 1 in den dort markierten Bereichen A bis F vergrößert dargestellt.

Figur 2a zeigt hierbei eine Verbindung von vier Fachwerkkomponenten 5, bei der ein Steher 15, eine Diagonalstrebe 13, eine Querstrebe 11 und ein Untergurt 9 miteinander mithilfe von Verbinderkomponenten 27 fest verbunden sind. Der Steher 15, die Diagonalstrebe 13 und die Querstrebe 11 sind dabei in Form geschnittener und gegebenenfalls gebogener Metallblechprofile bereitgestellt, wobei zumindest der Steher 15 aus mehreren Teilkomponenten in Form einzelner in Form verschiedener geschnittener Metallbleche zusammengesetzt ist. Der Untergurt 9 ist mit einem Vierkantrohr ausgebildet.

Figur 2b zeigt eine weitere Teilansicht auf einen Bereich des Fachwerks 3, bei dem ein Obergurt 7 und ein Untergurt 9 mittels eines Stehers 15 und Diagonalstreben 13 miteinander verbunden sind und mittels Querstreben 11 mit parallel verlaufenden Oberbeziehungsweise Untergurten 7, 9 (nicht dargestellt) verbunden sind. An dem Steher 15 sind ferner Spante 29 als Aufnahme für Schienen ausgebildet. Alle genannten Fachwerkkomponenten sind dabei wieder durch geeignet stabile und positionierende Verbinderkomponenten 27 fest miteinander verbunden.

Figur 2c zeigt einen Teilbereich eines aus mehreren Teilkomponenten 31 zusammengesetzten Ober- oder Untergurtes 7, 9. Die Teilkomponenten 31 sind jeweils als Vierkantrohr ausgebildet und längs hintereinander angeordnet. An einem Stoßbereich sind die beiden Teilkomponenten 31 mithilfe eines im Inneren des Vierkantrohrs angeordneten Verbindungsteils 33 miteinander verbunden. Das Verbindungsteil 33 ist dabei wiederum über stabile, lasttragende und positionierende Verbinderkomponenten 27 mit jeder der Teilkomponenten 31 des Ober- beziehungsweise Untergurts 7, 9 verbunden. Auf diese Weise kann ein meist mehrere Meter langer Ober- beziehungsweise Untergurt 7, 9 aus mehreren Segmenten zusammengesetzt werden und braucht beispielsweise nicht als sperrige Einheit transportiert und in ein Bauwerk eingebracht zu werden.

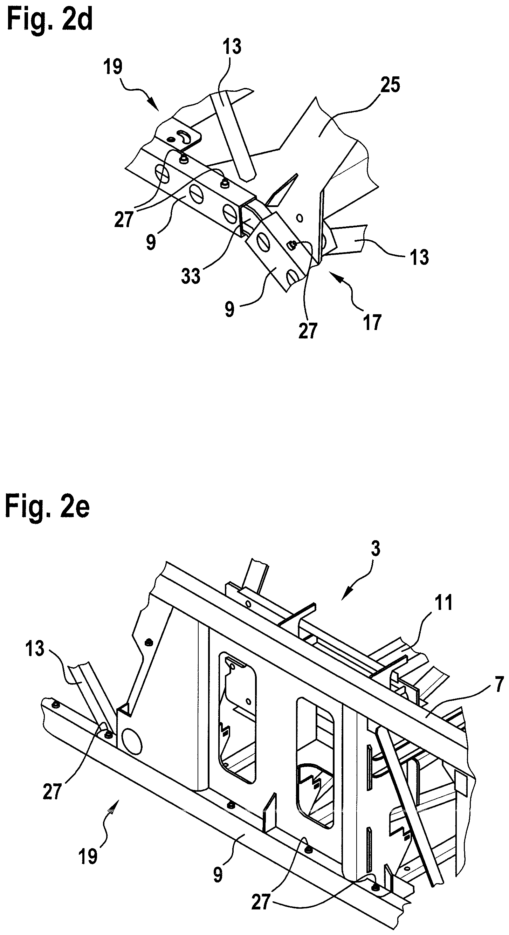

Figur 2d zeigt einen Teilbereich des Fachwerks 3, in dem ein Untergurt 9 aus dem zentralen Bereich 17 schräg kommend in einen anderen Teil des Untergurts 9, welcher im oberen Endbereich 19 horizontal verläuft, übergeht. An dieser Position setzt ein geeignet ausgebildeter Winkelsteher 25 an und verbindet sowohl den schräg verlaufenden Teil des Untergurts 9 als auch den horizontal verlaufenden Teil des Untergurts 9 mit einem Obergurt 7 (nicht dargestellt). Ferner sind die in zueinander schräg ausgerichteten Richtungen verlaufenden Teile des Untergurts 9 durch ein entsprechend mit einem Knick ausgebildetes Verbindungsteil 33 unterstützend miteinander verbunden. Die einzelnen Fachwerkkomponenten sind wiederum mit lasttragenden und positionierend wirkenden Verbinderkomponenten 27 untereinander verbunden.

Figur 2e zeigt eine Teilansicht des oberen Endbereichs 19 des Fachwerks 3. Auch hier ist wieder eine Vielzahl unterschiedlicher Fachwerkkomponenten mithilfe von Verbinderkomponenten lasttragend und präzise relativ zueinander ausgerichtet verbunden.

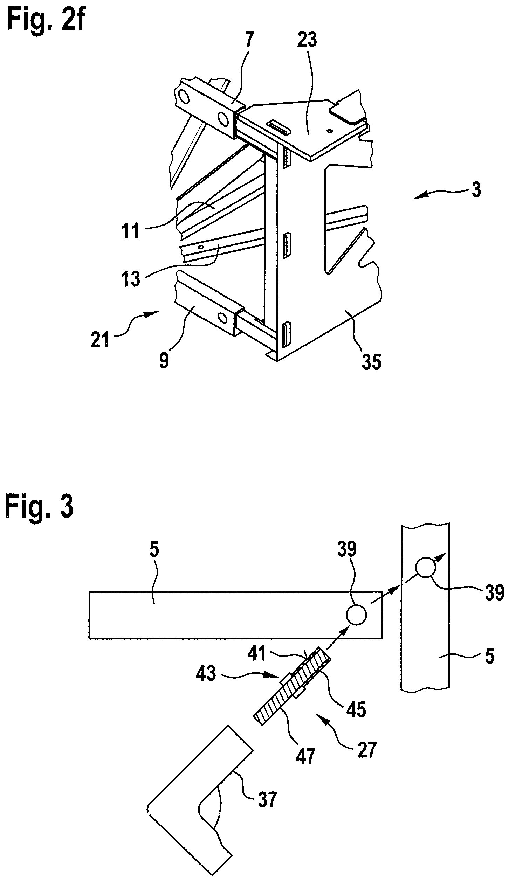

Figur 2f zeigt schließlich einen Bereich eines Fachwerkabschlusses 35 im unteren Endbereich 21 des Fachwerks 3.

Anhand der grob schematisch dargestellten Figur 3 soll nachfolgend ein Prinzip des Vorgangs des Verbindens zweier Fachwerkkomponenten 5 mithilfe einer Verbinderkomponente 27 erläutert werden.

Beide Fachwerkkomponenten 5 können beispielsweise aus einer Blechtafel geschnittene und gegebenenfalls nachträglich gebogene, abgekantete oder in anderer Weise weiterverarbeitete Blechprofile sein. Insbesondere können die Fachwerkkomponenten 5 durch präzise Schneidverfahren wie zum Beispiel Laserschneiden oder Wasserstrahlschneiden computergesteuert aus einer Blechtafel geschnitten werden. An geeigneten, vorher während einer Designphase zum Auslegen des Tragwerks ermittelten Positionen können dabei mit hoher Positionsgenauigkeit Verbindungsöffnungen 39 ausgebildet werden. Die Verbindungsöffnungen können hierbei mithilfe der genannten Schneidverfahren sehr präzise ausgebildet werden, so dass ihre Position sowie ihre Geometrie beispielsweise in einem Toleranzbereich von nur wenigen Zehntel Millimetern, insbesondere weniger als 0,3mm, vorgegeben werden kann. Die in den verschiedenen Fachwerkkomponenten 5 ausgebildeten Verbindungsöffnungen 39 sind dabei vorzugsweise alle exakt identisch ausgebildet, so dass Innenränder dieser Verbindungsöffnungen miteinander fluchten können, wenn zwei oder mehrere Fachwerkkomponenten 5 mit ihren Verbindungsöffnungen 39 aneinander angrenzend neben- beziehungsweise hintereinander angeordnet werden.

Um nun zwei oder mehrere Fachwerkkomponenten 5 miteinander zu verbinden, werden diese genau in dieser genannten Weise neben- beziehungsweise hintereinander angeordnet und eine Verbinderkomponente 27 in die fluchtenden Verbindungsöffnungen 39 derart eingeschoben, dass sie alle der angrenzend aneinander angeordneten Verbindungsöffnungen 39 durchgreift.

Anschließend wird die Verbinderkomponente 27 hinsichtlich ihrer Außengeometrie geeignet verformt. Die Verbinderkomponente 27 ist dabei derart ausgebildet und wird beim Verbinden von Fachwerkkomponenten 5 derart verformt, dass sie die von ihnen durchgriffenen Verbindungsöffnungen 39 nach dem Verbinden der Fachwerkkomponenten 5 vollständig und spielfrei ausfüllen und die Fachwerkkomponenten 5 in allen Raumrichtungen formschlüssig miteinander verbinden kann und außerdem die Fachwerkkomponenten beim Verbinden derselben, präzise relativ zueinander positionieren kann.

Hierzu kann eine Verbinderkomponente 27 derart ausgebildet sein und während des Verbindens der Fachwerkkomponenten 5 derart in ihrer Außengeometrie verformt werden, dass sie beim Verbinden der Fachwerkkomponenten 5 an einer die Verbindungsöffnungen 39 durchgreifenden Mantelfläche 41 derart aufgeweitet wird, dass sie anschließend die Verbindungsöffnungen 39 vollständig und spielfrei ausfüllen kann. Vorzugsweise presst die Verbinderkomponente 27 mit Ihrer Mantelfläche 41 nach dem Verformen der Mantelfläche 41 sogar mit einem erheblichen Druck gegen die Innenränder der Verbindungsöffnung 39, d.h. ist radial nach außen gegen die Innenränder der Verbindungsöffnung 39 presspassend mechanisch vorgespannt.

In dem in Figur 3 dargestellten Beispiel ist die Verbinderkomponente 27 dabei als hochfester Blindnietbolzen 43 ausgebildet. Dieser Blindnietbolzen 43 kann, nachdem er durch die Verbindungsöffnungen 39 geschoben wurde, von einer Seite her mit einer Nietzange 37 oder einem anderen geeigneten Werkzeug in der vorangehend beschriebenen Weise verformt werden.

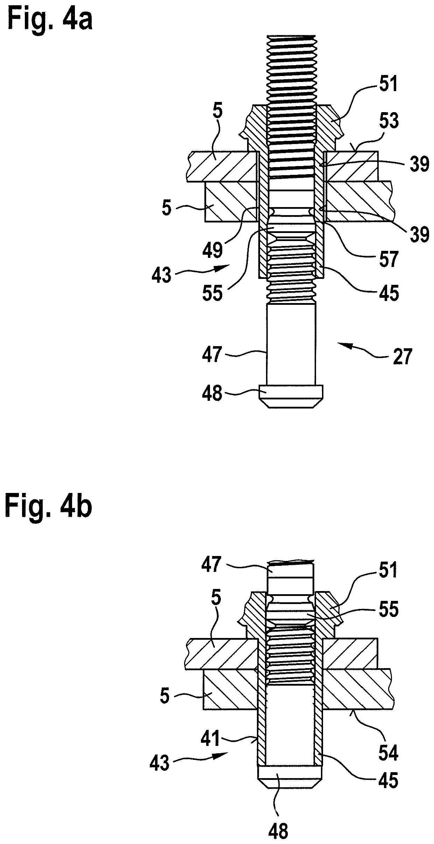

Die Figuren 4a und 4b zeigen Details eines Beispiels eines solchen Blindnietbolzens 43 vor und nach dem Verformen. Blindnietbolzen 43 dieser oder ähnlicher Art werden unter anderem unter dem Namen "Huck BOM®" vertrieben. Details eines solchen Blindnietbolzens sind beispielhaft in US 2,527,307 beschrieben.

Der Blindnietbolzen 43 verfügt über eine Hülse 45 und einen Stift 47, der unter anderem durch einen hohlen Innenbereich der Hülse 45 verläuft. An einem distalen Ende weist der Stift 47 einen im Querschnitt vergrößerten Kopf 48 auf. Ein Außenumfang des Kopfs 48 entspricht dabei in etwa einem Außenumfang der Hülse 45 und ist geringfügig kleiner als ein Innenumfang der Verbindungsöffnungen 39 in den zu verbindenden Fachwerkkomponenten 5, so dass der Blindnietbolzen 43 problemlos und mit einem gewissen Spiel in Form eines Spalts 49 in die Verbindungsöffnungen 39 eingeschoben werden kann. An einem proximalen Ende weist die Hülse 45 eine Verdickung 51 auf, deren Außenumfang größer ist als der Innenumfang der Verbindungsöffnungen 39. Die Verdickung 51 bildet somit einen Anschlag, mit dem der Blindnietbolzen 43 beim Einschieben in die Verbindungsöffnungen 39 an einer Außenoberfläche 53 einer der Fachwerkkomponenten 5 anliegt.

Die Hülse 45 weist nahe ihrem distalen Ende, welches bei der Montage nach dem Einschieben in die Verbindungsöffnungen 39 über die zu verbindenden Fachwerkkomponenten 5 distal hinausragt, eine geringere Materialdicke auf als in einem mittleren Bereich, der sich nach dem Einschieben in die Verbindungsöffnungen 39 im Innern der Verbindungsöffnungen 39 befindet. Mit anderen Worten nimmt eine Materialdicke der Hülse 45 proximal einer Übergangsstelle 57 geringfügig zu.

Dementsprechend nimmt ein Innendurchmesser der Hülse 45 proximal dieser Übergangsstelle 57 geringfügig ab.

Der Stift 47 wiederum hat einen Schulterbereich 55, der von seinem Außenumfang her zwar noch in den distalen Bereich der Hülse 45 passt, jedoch geringfügig größer ist als der Innenumfang der Hülse 45 proximal der Übergangsstelle 57.

Beim Montieren des Blindnietbolzens 43 wird der Stift 47 nun mithilfe der Nietzange 37 hin zu dessen proximalem Ende verlagert. Dabei wird der Schulterbereich 55 durch den nach innen verengten Bereich der Hülse 45 oberhalb der Übergangsstelle 57 hindurchgepresst und verformt diesen dabei plastisch. Hierdurch weitet sich die Hülse 45 aus ihrem Inneren heraus radial nach außen aus und schließt dabei den zuvor vorhandenen Spalt 49, wie dies in Figur 4b dargestellt ist. Nach einem solchen Umformen füllt der Blindnietbolzen 43 somit die Verbindungsöffnungen 39 vollständig aus, das heißt seine äußere Mantelfläche 41 liegt nach der beim Montieren durchgeführten plastischen Verformung spielfrei und vorzugsweise in Presspassung an den Innenberandungen der Verbindungsöffnungen 39 an. Die Hülse 45 kann daher auch als Spreizhülse bezeichnet werden.

Im Fortgang des Montagevorgangs wird dann der Stift 47 weiter hin zum proximalen Ende verlagert und verformt dabei das distal über die Fachwerkkomponenten 5 überragende Ende der Hülse 45, um dieses, ähnlich wie bei einem herkömmlichen Blindniet, formschlüssig gegen eine Oberfläche 54 dieser Verbinderkomponente 5 anzulegen (in Figur 4b nicht dargestellt).

Durch das während des Montagevorgangs durchgeführte plastische Verformen der Hülse 45 des Blindnietbolzens 43 kann somit einerseits dafür gesorgt werden, dass diese die Verbindungsöffnungen 39 in den Fachwerkkomponenten 5 vollständig und spielfrei ausfüllt und somit, zusätzlich zu einem Formschluss in Längserstreckungsrichtung des Blindnietbolzens 43, wie er auch bei herkömmlichen Nieten üblicherweise auftritt, auch ein Formschluss in allen Richtungen quer zu dieser Längserstreckungsrichtung etabliert wird, das heißt ein Formschluss in Richtungen, in denen sich die Fachwerkkomponenten 5 erstrecken. Die Fachwerkkomponenten 5 können aufgrund eines solchen in alle Raumrichtungen wirkenden Formschlusses sehr stabil und zuverlässig miteinander verbunden werden.

Andererseits kann das Aufweiten der Hülse 45 während des Montagevorgangs dazu dienen, die beiden Verbindungsöffnungen 39 der benachbart zueinander angeordneten Fachwerkkomponenten 5 präzise miteinander fluchtend auszurichten und somit die beiden Fachwerkkomponenten 5 sehr präzise relativ zueinander zu positionieren. Hierbei kann eine sehr präzise Positionierungstoleranz von beispielsweise wenigen Zehntel Millimetern, insbesondere vorzugsweise weniger als 0,3mm, erreicht werden.

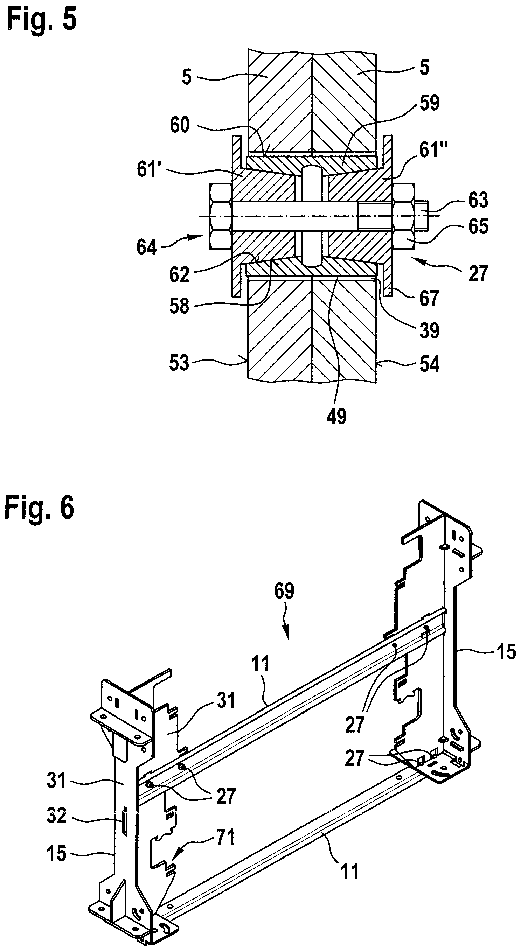

Figur 5 veranschaulicht eine alternative Variante einer Verbinderkomponente 27, wie sie zum Verbinden der Fachwerkkomponenten 5 des hierin beschriebenen Tragwerks eingesetzt werden kann.

Die Verbinderkomponente 27 weist dabei eine hohlzylindrische Hülse 59 sowie einen ersten und einen zweiten Konus 61', 61" auf. Die Hülse 59 weist in ihrer axialen Mitte eine größere Wandstärke auf als an ihren axialen Rändern. Dementsprechend ist ein Innendurchmesser der Hülse 59 an den axialen Rändern größer als in der axialen Mitte der Hülse 59. Der erste Konus 61' und der zweite Konus 61" sind entgegengesetzt orientiert angeordnet und greifen in die Hülse 59 ein, wobei konische Außenoberflächen 62 vorzugsweise entsprechend komplementär zu Innenoberflächen 58 der Hülse 59 ausgebildet sind. Insbesondere die Hülse 59 kann aus einem einfach plastisch verformbaren Material, insbesondere Metall wie beispielsweise Stahl, bestehen und eine Materialstärke aufweisen, die ein plastisches Verformen der Hülse 59 durch von den Konus 61', 61" bewirkte Kräfte ermöglicht.

Eine Gesamtheit der Verbinderkomponente 27 aus Hülse 59 und beiden Konus 61', 61" ist in miteinander fluchtend ausgerichtete Verbindungsöffnungen 39 zweier benachbart aneinander angrenzend angeordneter Fachwerkkomponenten 5 eingeführt. Dabei besteht zwischen einer Außenfläche 60 der Hülse 59 und einer Innenberandung der Verbindungsöffnungen 39 ein gewisses Spiel in Form eines Spaltes 49.

Durch die beiden Konus 61', 61" hindurch verläuft ein Spannelement 64, welches im dargestellten Beispiel als Schraube 63 mit zugehöriger Mutter 65 dargestellt ist.

Alternativ kann das Spannelement 64 auch in anderer Weise, beispielsweise mit einem Niet, insbesondere einem Blindniet, ausgeführt werden. Das Spannelement 64 kann dazu benutzt werden, die beiden Konus 61', 61" axial hin zueinander, das heißt hin zur Mitte der Hülse 59, zu verlagern. Dabei gleiten die Außenoberflächen 62 der Konus 61', 61" entlang der Innenoberflächen 58 der Hülse 59 und spreizen diese radial nach außen. Die Hülse 59 kann daher auch als Spreizhülse und die Konus 61', 61" als Spreizkonus bezeichnet werden.

Hierdurch kommt es zu einer plastischen Verformung der Hülse 59, wodurch der anfänglich vorhandene Spalt 49 geschlossen wird und die Verbinderkomponente 27 nach ihrer Montage die Verbindungsöffnungen 39 vollständig, spielfrei und vorzugsweise presspassend ausfüllt.

An axial äußeren Enden sind an den beiden Konus 61', 61" radial überstehende Flansche 67 vorgesehen, die sich im fertig montierten Zustand gegen Außenoberflächen 53, 54 der Fachwerkkomponenten 5 anlegen und diese in Längsertreckungsrichtung des Spannelements 64 formschlüssig halten können.

Insgesamt können somit auch mit einer solchen, eine Hülse 59 und wenigstens einen Konus 61', möglichst aber zwei Konus 61', 61", aufweisenden Verbindungskomponente 27 die beiden Fachwerkkomponenten 5 in allen Richtungen formschlüssig miteinander verbunden werden und dabei gleichzeitig positionsgenau relativ zueinander ausgerichtet werden.

Figur 6 zeigt einen vormontierten sogenannten H-Rahmen 69, der einen Bestandteil eines Fachwerks 3 eines Tragwerks 1 bilden kann. Der H-Rahmen 69 weist zwei vertikal verlaufende Steher 15 auf, welche durch zwei horizontal verlaufende Querstreben 11 miteinander verbunden sind. Jeweils zwei Verbinderkomponenten 27 sorgen dabei für eine lasttragende mechanische Verbindung jeweils zwischen den Stehern 15 und den Querstreben 11. Aufgrund ihrer beim Montieren positionierend wirkenden Ausgestaltung kann mithilfe der Verbinderkomponenten 27 ferner erreicht werden, dass die Steher 15 und die Querstreben 11 relativ zueinander extrem genau positioniert verbunden sind. Wenn ferner die Verbindungsöffnungen 39 in den einzelnen Stehern 15 und Querstreben 11 in ihren Abständen zueinander hochpräzise beispielsweise durch computerunterstütztes Laserschneider oder Wasserstrahlschneiden ausgebildet wurden, kann auf diese Weise ein hochpräzise gefertigter H-Rahmen 69 vormontiert werden, ohne dass hierbei notwendigerweise irgendwelche lasttragenden Schweißungen durchgeführt werden müssten.

Stattdessen können die Verbinderkomponenten 27 einfach beispielsweise auch von ungelernten Fachkräften montiert werden. Durch ein Vormontieren mehrerer H-Rahmen 69 und Verbinden dieser H-Rahmen 69 durch dazwischen eingefügte und ebenfalls mit Verbinderkomponenten 27 positionspräzise angebrachten Diagonalstreben 13 sowie Teilen des Obergurts 7 und des Untergurts 9 kann daher insgesamt in einfacher Weise und mit wenig Personal äußerst rasch ein gesamtes Fachwerk 3 für ein Tragwerk 1 zusammengesetzt werden. Aufgrund der präzise positionierenden Eigenschaften der hierbei eingesetzten Verbinderkomponenten 27 kann ein in solcher Weise zusammengesetztes Tragwerk 1 über seine gesamte Länge hin hochpräzise zusammengefügt werden, wobei Abweichungen von einer Soll-Geometrie typischerweise weniger als wenige Millimeter, oft sogar weniger als wenige Zehntel Millimeter, betragen können.

Nachfolgend sollen einige mögliche Ausgestaltungen des hierin vorgeschlagenen Tragwerks 1 kurz ergänzend erläutert werden, wobei einem Fachmann verständlich ist, dass das Fachwerk 3 sowie daran anzubauende weitere Komponenten des Tragwerks 1 beziehungsweise der gesamten Personentransportanlage ergänzend oder alternativ auch in anderer Weise ausgebildet sein können.

An den Stehern 15 können Spanten 71 ausgebildet sein, mithilfe derer beispielsweise Schienen der Personentransportanlage an dem Tragwerk 1 befestigt werden können. Die Spanten 71 können dabei durch eine geeignete geometrische Ausbildung eines hierfür in Form geschnittenen Blechs ausgebildet werden. Da das gesamte Tragwerk 1 hochpräzise, das heißt mit allenfalls sehr geringen Abweichungen von einer Soll-Geometrie, gefertigt werden kann und auch die Spanten 71 sehr präzise geschnitten werden können, können daran zu befestigende Schienen sehr genau in einer Soll-Geometrie verlaufen und brauchen nicht bei deren Montage oder nachträglich ausgerichtet werden, wie dies bei herkömmlich gefertigten Tragwerken 1 häufig der Fall ist.

Die Steher 15 können dabei aus zwei Teilkomponenten 31 in Form von geeignet in Form geschnittenen Blechtafeln zusammengesetzt sein. Die beiden Teilkomponenten 31 können beispielsweise über eine Steckverbindung 32 provisorisch miteinander verbunden sein, um den Steher 15 beispielsweise während eines Montagevorgangs einfach als Einheit handhaben zu können. Alternativ oder ergänzend können lokale Schweißverbindungen die beiden Teilkomponenten 31 miteinander verbinden. Weder die Steckverbindung 32 noch etwaige Schweißverbindungen brauchen hierbei jedoch lasttragend stabil ausgeführt werden, sondern sollen die Teilkomponenten 31 lediglich temporär während eines Montagevorgangs aneinander befestigen, sofern die beiden Teilkomponenten 31 später auch miteinander durch Verbinderkomponenten 27 miteinander lasttragend verbunden werden. Selbstverständlich können die Steckverbindungen und/oder die Schweißverbindungen zwischen den Teilkomponenten auch soweit lasttragend ausgeführt sein, dass die Teilkomponenten 31 betriebssicher miteinander verbunden sind, so dass nicht beide durch Verbinderkomponenten 27 miteinander verbunden sein müssen.

An den Stehern 15 können weitere Befestigungsbereiche beispielsweise für Balustradenteile und/oder Verkleidungsbauteile vorgesehen sein.

Auch Schienenblöcke für die Personentransportanlage können aus gesteckten Bauteilen gefertigt und auf die Steher 15 in deren Umlenkbereichen abgestimmt sein.

Die Winkelsteher 25 an den Übergangsstellen zwischen dem zentralen Bereich 17 und dem oberen beziehungsweise unteren Endbereich 19, 21 des Fachwerks 3 bestimmen im Wesentlichen einen Neigungswinkel der letztendlich installierten Fahrtreppe.

Die Steher 15 können einen Flansch mit zwei rechtwinklig zueinander angeordneten Flächen aufweisen, die in einem montierten Zustand mit zwei Flächen von Vierkantrohren der Ober- beziehungsweise Untergurte 7, 9 verbunden sein können. An den Vierkantrohren können ferner Verstärkungswinkel vorgesehen sein.

Selbstverständlich muss nicht das ganze Tragwerk 1 fachwerkförmig aufgebaut sein. Die in der Figur 1 dargestellten Endbereiche 19, 21 beziehungsweise Antrittsbereiche, beziehungsweise Umlenkköpfe der Personentransportanlage können beispielsweise auch aus faserverstärktem Zement gegossen sein. Solche gegossenen Endbereiche 19, 21 können aus dem Zementmaterial bestehende Fahrbahnen für die Rollen eines Stufenbandes oder Palettenbandes sowie Aufnahmestellen von Lagern und Antriebsteilen aufweisen. Ferner müssen die aus Zement gegossen Endbereiche 19, 21 auch Anschlussstellen aufweisen, so dass ein, mittels Verbinderkomponenten 27, Obergurten 7, Untergurten 9, Stehern 15, Querstreben 11 und Diagonalstreben 13 aufgebauter zentraler Bereich 17 zwischen den beiden gegossenen Endbereichen 19, 21 eingefügt werden kann.

Zum Herstellen eines vorangehend beschriebenen Tragwerks 1 können zunächst mehrere einzelne Fachwerkkomponenten 5 mit geeignet darin ausgebildeten Verbindungsöffnungen 39 bereitgestellt werden. Hierzu kann beispielsweise eine Vielzahl baugleicher Steher 15, Querstreben 11 und/oder Diagonalstreben 13 vorab serienmäßig hergestellt werden und mit auf bohrungsfüllende Verbinderkomponenten abgestimmten Verbindungsöffnungen 39 ausgestattet werden. Bei einem Steher 15 können hierzu beispielsweise zwei zusammenzusteckende Blechteile vorab provisorisch miteinander verbunden werden, indem sie beispielsweise mithilfe von Steckverbindungen verbunden werden, welche durch Schweißpunkte oder Crimp-artigen Deformationen lokal unlösbar aneinander gesichert sind. Die Steher 15 weisen dabei an beiden Enden angeordnete Verbindungsöffnungen 39 auf, welche präzise zueinander und einen Parallelabstand von Obergurt 7 und Untergurt 9 vorgebend angeordnet sein können. Zumindest eines der Blechteile eines Stehers 15 kann Aufnahmen zur Befestigung von Schienen aufweisen, wobei die Aufnahmen relativ zu den Verbindungsöffnungen 39 für die Verbinderkomponenten 27 präzise angeordnet ausgebildet werden. Auch die in den Quer- beziehungsweise Diagonalstreben 11, 13 auszubildenden Verbindungsöffnungen 39 werden jeweils an entgegengesetzten Enden dieser Streben präzise zueinander beabstandet angeordnet.

Während die Quer- und Diagonalstreben 11, 13 sowie die Steher 15 vorzugsweise als serienmäßig hergestellte Standardkomponenten vorgefertigt werden können und für unterschiedlichste Layouts von Personentransportanlagen eingesetzt werden können, müssen die Obergurte 7 und Untergurte 9 im Regelfall auftragsspezifisch hergestellt werden. Positionen darin vorzusehender Verbindungsöffnungen 39 müssen dabei mit Rücksicht auf eine letztendlich zu erreichende individuelle Fachwerkgeometrie präzise berechnet und in den Ober- und Untergurten ausgebildet werden. Dabei ist auch eine Höhe der Steher 15 und ein Abstandes von Verbindungsöffnungen 39 in den Diagonalstreben 13 zu berücksichtigen.

Um das Fachwerk 3 des Tragwerks 1 zusammenzubauen, kann es vorteilhaft sein, zunächst mehrere H-Rahmen 69 durch Verbinden jeweils zweier Steher 15 mit mindestens einer Querstrebe 11 unter Verwendung der hierin beschriebenen bohrungsfüllenden Verbinderkomponenten 27 vorzumontieren. Solche H-Rahmen 69 können einfach auch von einer einzelnen Person gehandhabt werden. Die H-Rahmen 69 können dann mittels der Verbinderkomponenten 27 präzise mit den Obergurten 7 und den Untergurten 9 verbunden werden. Anschließend können die Diagonalstreben 13 eingefügt und wiederum mittels Verbinderkomponenten 27 mit dem bereits vorgefertigten Rest der Fachwerkstruktur verbunden werden. Abschließend können vorzugsweise serienmäßig baugleich hergestellte Winkelsteher 25 aus mindestens zwei zusammengesteckten Blechteilen, die beispielsweise über Steckverbindungen durch Schweißpunkte oder Deformationen unlösbar gesichert sind, an dem Fachwerk 3 angebracht werden. Zumindest eines der Blechteile kann hierbei Aufnahmen zur Befestigung von Schienen aufweisen und zu deren Befestigung mithilfe von Verbinderkomponenten 27 präzise ausgerichtete Verbindungsöffnungen 39 aufweisen.

Ein besonderer Vorteil des hierin beschriebenen Tragwerks 1 kann darin gesehen werden, dass es mittels eines die speziellen Eigenschaften dieses Tragwerks nutzenden Montageverfahrens besonders einfach auch zur Montage von Personentransportanlagen in bereits bestehenden Bauwerken eingesetzt werden kann. Beispielsweise kann es manchmal nötig sein, existierende Personentransportanlagen in einem Bauwerk auszutauschen oder ein Bauwerk ergänzend mit Personentransportanlagen nachzurüsten.

Herkömmliche Tragwerke für Personentransportanlagen, welche in einem Herstellungswerk komplett oder in großen Modulen vorgefertigt werden müssen, können nur sehr aufwendig zu dem Bauwerk, in dem die Personentransportanlage installiert werden soll, transportiert und in ein Inneres dieses Bauwerks eingebracht werden. Beispielsweise war es bisher häufig nötig, ein nicht besonders schweres, aber sehr ausladendes Tragwerk mittels eines Sattelschleppers von einem Herstellungsort hin zu einem Ziel-Bauwerk zu transportieren. An dem Ziel-Bauwerk konnte es dann notwendig sein, beispielsweise existierende Wände teilweise zu entfernen, um einen Weg zu schaffen, durch den das ausladende Tragwerk in das Innere des Bauwerks hin zu dem Bestimmungsort für die Personentransportanlage gebracht werden konnte. All dies war mit erheblichem Planungsaufwand und logistischem Aufwand und somit erheblichen Kosten verbunden.

Im Gegensatz hierzu ist es bei dem hierin beschriebenen Tragwerk möglich, dieses mithilfe eines speziell angepassten, vereinfachten Montageverfahrens direkt im Innern eines Bauwerks aufzubauen. Hierzu können zunächst mehrere einzelne Fachwerkkomponenten 5 mit den darin bereits vorab ausgebildeten Verbindungsöffnungen 39 an eine Montageposition innerhalb des Bauwerks eingebracht werden. Falls es sich um einen Austausch einer Personentransportanlage handelt, kann gegebenenfalls vorab die bestehende Personentransportanlage entfernt werden. Ferner können in dem Bauwerk wenigstens zwei Auflagestellen zur Aufnahme der Personentransportanlage vorbereitet werden. Falls notwendig, kann außerdem ein temporäres Gerüst zwischen solchen Auflagestellen erstellt werden.

Das in Einzelteile zerlegte Fachwerk 3 kann mit seinen Fachwerkkomponenten 5 dann direkt innerhalb des Bauwerks zusammengebaut werden. Die einzelnen zum Teil als baugleiche Standardkomponenten vorgesehenen Fachwerkkomponenten 5 können dabei wie beschrieben mithilfe der lasttragenden und positionsgebenden Verbinderkomponenten 27 miteinander verbunden werden und dadurch das hochpräzise ausgerichtete Fachwerk 3 bilden. Das derart zusammengebaute Fachwerk 3 kann schließlich an den vorbereiteten Montagestellen des Bauwerks innerhalb des Bauwerks montiert werden.

Abschließend sollen einige mögliche Vorteile des hierin vorgeschlagenen Tragwerks 1 beziehungsweise der Verfahren zu seiner Herstellung oder seiner Montage in einem Bauwerk erläutert werden.

Das Fachwerk für das vorgeschlagene Tragwerk 1 kann wesentlich kostengünstiger aufbaubar sein als ein beispielsweise durchgehend geschweißtes Fachwerk. Es kann insbesondere ohne Montageleeren in extrem kurzer Zeit, beispielsweise innerhalb einiger Stunden oder weniger Tage, vor Ort zusammengebaut werden. Als einziges Werkzeug hierbei wird beispielsweise eine entsprechend für die Montage der Verbinderkomponenten 39 geeignete Nietzange benötigt. Für einen Zusammenbau des Fachwerks 3 sind vorteilhafterweise keine zertifizierten Fachkräfte wie zum Beispiel zertifizierte Schweißer erforderlich. Ferner kann auch ein nachträgliches Richten des Fachwerks im Regelfall entfallen. Bauteile des Fachwerks, insbesondere dessen Fachwerkkomponenten 5, können vor ihrem Zusammenbau beispielsweise lackiert oder insbesondere verzinkt werden. Ein Transportvolumen des anfänglich zerlegten Fachwerks 3 kann extrem klein sein. Die einzelnen Fachwerkkomponenten 5 können beispielsweise problemlos durch vorhandene Öffnungen in ein Inneres eines Bauwerks eingebracht werden, ohne dass beispielsweise Wände des Bauwerks herausgebrochen werden müssten. Auch Schmutz und Lärmemissionen am Einbauort können durch die einzusetzende saubere und präzise Verbindungstechnik mithilfe der speziellen Verbinderkomponenten 27 minimiert werden, da beispielsweise Reinigungs-, Trenn- und Schleifarbeiten sowie Schweißarbeiten an zum Beispiel leer geräumten Fachwerken, wie sie ansonsten häufig bei Modernisierungslösungen anfallen, nicht nötig sind. Ferner kann es als Vorteil gesehen werden, dass durch die Möglichkeit, das Fachwerk 3 am Einbauort aufbauen zu können, ein hoher Lokalfertigungsanteil erreicht werden kann. Dies kann insbesondere bei Aufträgen der öffentlichen Hand ein entscheidender Verkaufsfaktor sein. Ferner kann es vorteilhaft sein, dass nur wenige Bauteile wie beispielsweise die Ober- und Untergurte 7, 9 des Fachwerks 3 auftragsspezifisch gefertigt werden müssen, wohingegen viele andere Fachwerkkomponenten 5 wie die Querstreben 11, Diagonalstreben 13 und Steher 15 als standardisierte, serienmäßig herzustellende Bauteile vorgehalten werden können. Dies kann eine gesamte Logistik für eine Herstellung und Montage von Personentransportanlagen entscheidend vereinfachen. Die beschriebene erreichbare hohe Präzision des hierin beschriebenen zusammengebauten Fachwerks 3 kann zudem einen entscheidenden Vorteil dahingehend haben, dass Schienenbefestigungen (Spanten) nicht wie bei Modernisierungslösungen im geschweißten Fachwerk ausgerichtet eingebaut (geschweißt oder geschraubt) werden brauchen, sondern dass die Spanten beispielsweise direkt an den Stehern 15 ausgebildet sein können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Der Schutzumfang der Erfindung wird durch die beigefügten Ansprüche bestimmt. Bezugszeichen in den Ansprüchen sind nicht als Einschränkung anzusehen.

## Patentansprüche

1. Verfahren zum Montieren eines Tragwerks (1) für eine Personentransportanlage die als Fahrtreppe oder Fahrsteig ausgestaltet ist, in einem Bauwerk,
wobei das Tragwerk (1) ein Fachwerk (3) aus miteinander verbundenen lasttragenden Fachwerkkomponenten (5) einschließlich Obergurten (7), Untergurten (9), Querstreben (11), Diagonalstreben (13) und Stehern (15) aufweist,
wobei das Verfahren aufweist:
Einbringen mehrerer einzelner Fachwerkkomponenten (5) mit darin ausgebildeten Verbindungsöffnungen (39) an eine Montageposition innerhalb des Bauwerks, Zusammenbau des Fachwerks (3) an oder nahe der Montageposition innerhalb des Bauwerks durch Verbinden der Fachwerkkomponenten (5) miteinander mittels lasttragender Verbinderkomponenten (27), indem jeweils eine Verbinderkomponente (27) durch angrenzend aneinander angeordnete Verbindungsöffnungen (39) wenigstens zweier benachbarter Fachwerkkomponenten (5) hindurchgreifend angeordnet wird und dann hinsichtlich ihrer Außengeometrie verformt wird,
wobei die Verbinderkomponenten (27) derart ausgebildet sind und beim Verbinden von Fachwerkkomponenten (5) verformt werden, dass sie die von ihnen durchgriffenen Verbindungsöffnungen (39) nach dem Verbinden der Fachwerkkomponenten (5) vollständig und spielfrei ausfüllen und die Fachwerkkomponenten (5) in allen Raumrichtungen formschlüssig miteinander verbinden und die Fachwerkkomponenten (5) beim Verbinden der Fachwerkkomponenten (5) relativ zueinander positionieren, Montieren des zusammengebauten Fachwerks an vorbereitete Montagestellen des Bauwerks innerhalb des Bauwerks, **dadurch gekennzeichnet, dass** während des Zusammenbauens des Fachwerks (3) die Fachwerkkomponenten (5) in folgender Sequenz miteinander verbunden werden:
Vormontieren von H-Rahmen (69) durch Verbinden jeweils zweier Steher (15) mit mindestens einer Querstrebe (11) mittels der Verbinderkomponenten (27);
Verbinden der vormontierten H-Rahmen (69) mit den Obergurten (7) und den Untergurten (9) jeweils mittels der Verbinderkomponenten (27);
Einfügen und Verbinden der Diagonalstreben (13) mittels der Verbinderkomponenten (27).

2. Verfahren nach Anspruch 1, wobei die Verbinderkomponenten (27) derart ausgebildet sind und während des Verbindens von Fachwerkkomponenten (5) derart in ihrer Außengeometrie verformt werden, dass sie beim Verbinden der Fachwerkkomponenten (5) an einer die Verbindungsöffnungen (39) durchgreifenden Mantelfläche (41) derart aufgeweitet werden, dass sie die Verbindungsöffnungen (39) vollständig und spielfrei ausfüllen und dabei die aufgeweitete Mantelfläche (41) einen in radialer Richtung nach außen wirkenden Druck auf Innenränder der Verbindungsöffnungen (39) ausübt.

3. Verfahren nach Anspruch 1 oder 2, wobei die Verbinderkomponenten Niete, insbesondere hochfeste Blindnietbolzen (43), sind oder mit einer Hülse (59) und wenigstens einem in der Hülse (59) aufgenommenen und relativ zu der Hülse (59) verlagerbaren Konus (61) ausgebildet sind.

4. Verfahren nach einem der vorangehenden Ansprüche, wobei die Verbinderkomponenten (27) derart ausgebildet und hinsichtlich ihrer Außengeometrie verformt werden, dass sie die von ihnen durchgriffenen Verbindungsöffnungen (39) derart vollständig und spielfrei ausfüllen, dass sie die Verbindungsöffnungen (39) beim Verbinden der Fachwerkkomponenten (5) mit einer Toleranz von weniger als 0,3mm relativ zueinander positionieren.

5. Verfahren nach einem der vorangehenden Ansprüche, wobei alle Querstreben (11), Diagonalstreben (13) und Steher (15) des Fachwerks (3) jeweils serienmäßig baugleich hergestellt werden.

6. Verfahren nach einem der vorangehenden Ansprüche, wobei die Querstreben (11), Diagonalstreben (13) und Steher (15) aus Blechtafeln gefertigt werden.

7. Verfahren nach einem der vorangehenden Ansprüche, wobei die Obergurte (7) und Untergurte (9) auftragsspezifisch konfiguriert und hergestellt werden.

8. Verfahren nach einem der vorangehenden Ansprüche, wobei die Obergurte (7) und Untergurte (9) mit Vierkantrohren gefertigt werden.

9. Verfahren nach einem der vorangehenden Ansprüche, wobei einzelne bereitzustellende Fachwerkkomponenten (5) aus mehreren Teilkomponenten (31) zusammengesetzt werden.

10. Verfahren nach Anspruch 9, wobei die Teilkomponenten (31) bereitzustellender Fachwerkkomponenten (5) vor dem Verbinden der Fachwerkkomponenten (5) untereinander durch eine nicht-lasttragende Schweißverbindung oder Crimpverbindung miteinander verbunden werden.

11. Verfahren nach einem der vorangehenden Ansprüche, wobei die bereitzustellenden Fachwerkkomponenten (5) und/oder Teilkomponenten (31) bereitzustellender Fachwerkkomponenten (5) vor dem Verbinden der Fachwerkkomponenten (5) mittels der Verbinderkomponenten (27) durch eine nicht-lasttragende Steckverbindung (32) miteinander verbunden werden.

12. Verfahren nach einem der vorangehenden Ansprüche, wobei die Obergurte (7) und/oder die Untergurte (9) aus mehreren Teilsegmenten (31) zusammenzusetzen sind, jedes Teilsegment (31) Verbindungsöffnungen (39) aufweist und die Teilsegmente (31) mittels der Verbinderkomponenten (27) verbunden werden.

13. Verfahren nach Anspruch 12, wobei die Teilsegmente (31) an oder nahe der Montageposition innerhalb des Bauwerks miteinander verbunden werden.

14. Verfahren nach einem der vorangehenden Ansprüche, wobei ergänzend wenigstens ein Element aus einer Gruppe aufweisend einen Schienenblock, Flanschteile eines Antriebsraums und Flanschteile einer Spannstation durch Verbinden mit Fachwerkkomponenten (5) des Fachwerks (3) mittels der Verbinderkomponenten (27) in die Personentransportanlage eingebaut wird.

## Claims

1. Method for installing a support structure (1) for a passenger transport system which is designed as an escalator or moving walkway, in a building, the support structure (1) comprising a truss (3) comprising interconnected load-bearing truss components (5) including top chords (7), bottom chords (9), cross braces (11), diagonal braces (13) and uprights (15), the method comprising:
introducing a plurality of individual truss components (5) having connecting openings (39) formed therein at an installation position inside the building, assembling the truss (3) at or near the installation position inside the building by interconnecting the truss components (5) by means of load-bearing connector components (27), by in each case one connector component (27) being arranged so as to pass through adjoining connecting openings (39) of at least two adjacent truss components (5) and then being deformed in terms of its outer geometry, the connector components (27) being designed and, when the truss components (5) are connected, being deformed such that they fill the connecting openings (39) through which they pass completely and without play after the truss components (5) are connected and they interlockingly interconnect the truss components (5) in all spatial directions and position the truss components (5) relative to one another when the truss components (5) are connected, installing the assembled truss at prepared installation points of the building inside the building, **characterized in that** the truss components (5) are interconnected in the following sequence during assembly of the truss (3):
pre-installing H-frames (69) by connecting in each case two uprights (15) to at least one cross brace (11) by means of the connector components (27);
connecting the pre-installed H-frames (69) to the top chords (7) and the bottom chords (9) in each case by means of the connector components (27);
inserting and connecting the diagonal braces (13) by means of the connector components (27).

2. Method according to claim 1, wherein the connector components (27) are designed and, during the connection of truss components (5), deformed in terms of their outer geometry such that, when the truss components (5) are connected, they are widened at a lateral surface (41) that passes through the connecting openings (39), in such a way that they fill the connecting openings (39) completely and without play and, in the process, the widened lateral surface (41) exerts pressure that acts outwardly in the radial direction on inner edges of the connecting openings (39).

3. Method according to either claim 1 or claim 2, wherein the connector components are rivets, in particular high-strength blind rivet bolts (43), or are formed with a sleeve (59) and at least one taper (61) that is received in the sleeve (59) and is movable relative to the sleeve (59).

4. Method according to any of the preceding claims, wherein the connector components (27) are designed and deformed in terms of their outer geometry such that they fill the connecting openings (39) through which they pass completely and without play in such a way that they position the connecting openings (39) relative to one another with a tolerance of less than 0.3 mm when the truss components (5) are connected.

5. Method according to any of the preceding claims, wherein all the cross braces (11), diagonal braces (13) and uprights (15) of the truss (3) are each produced in series so as to be identical in construction.

6. Method according to any of the preceding claims, wherein the cross braces (11), diagonal braces (13) and uprights (15) are manufactured from sheet metal panels.

7. Method according to any of the preceding claims, wherein the top chords (7) and bottom chords (9) are designed and produced on an order-specific basis.

8. Method according to any of the preceding claims, wherein the top chords (7) and bottom chords (9) are manufactured with square tubes.

9. Method according to any of the preceding claims, wherein individual truss components (5) to be provided are composed of a plurality of sub-components (31).

10. Method according to claim 9, wherein the sub-components (31) of truss components (5) to be provided are interconnected by a non-load-bearing weld joint or crimp joint prior to the truss components (5) being interconnected.

11. Method according to any of the preceding claims, wherein the truss components (5) to be provided and/or sub-components (31) of truss components (5) to be provided are interconnected by a non-load-bearing plug-in connection (32) prior to the truss components (5) being connected by means of the connector components (27).

12. Method according to any of the preceding claims, wherein the top chords (7) and/or the bottom chords (9) can be composed of a plurality of sub-segments (31), each sub-segment (31) comprises connecting openings (39) and the sub-segments (31) are connected by means of the connector components (27).

13. Method according to claim 12, wherein the sub-segments (31) are interconnected at or near the installation position inside the building.

14. Method according to any of the preceding claims, wherein additionally at least one element from a group comprising a rail block, flange parts of a drive chamber and flange parts of a clamping station is installed in the passenger transport system by being connected to truss components (5) of the truss (3) by means of the connector components (27).

## Revendications

1. Procédé de montage d'une ossature porteuse (1) pour une installation de transport de personnes conçue sous forme d'escalier mécanique ou de trottoir roulant dans un ouvrage, l'ossature porteuse (1) comportant une charpente (3) constituée de composants de charpente (5) supportant une charge reliés entre eux, y compris des membrures supérieures (7), des membrures inférieures (9), des entretoises transversales (11), des entretoises diagonales (13) et des montants (15), le procédé comportant :
l'introduction d'une pluralité de composants de charpente (5) individuels, dont la partie intérieure présente des ouvertures de liaison (39), dans une position de montage à l'intérieur de l'ouvrage, l'assemblage de la charpente (3) au niveau ou à proximité de la position de montage à l'intérieur de l'ouvrage, par la liaison des composants de charpente (5) entre eux au moyen de composants de liaison (27) supportant une charge, en disposant chaque composant de liaison (27) de manière à ce qu'il vienne en prise par des ouvertures de liaison (39) disposées de manière adjacente à au moins deux composants de charpente (5) voisins, pour être ensuite déformé en ce qui concerne sa géométrie extérieure, les composants de liaison (27) étant conçus et déformés lors de la liaison des composants de charpente (5) de manière à remplir entièrement et sans jeu les ouvertures de liaison (39) qu'ils traversent après la liaison des composants de charpente, de manière à ce que les composants de charpente (5) se relient les uns aux autres par engagement positif dans toutes les directions, et de manière à ce que les composants de charpente (5) se positionnent les uns par rapport aux autres lors de la liaison des composants de charpente (5), le montage de la charpente assemblée sur des zones de montage préparées de l'ouvrageà l'intérieur de l'ouvrage, **caractérisé en ce que**, lors de l'assemblage de la charpente (3), les composants de charpente (5) sont reliés entre eux dans la séquence suivante :
le pré-montage de cadres en H (69) par la liaison, à chaque fois, de deux montants (15) à au moins une entretoise transversale (11) au moyen des composants de liaison (27) ;
la liaison des cadres en H (69) pré-montés aux membrures supérieures (7) et aux membrures inférieures (9) à chaque fois au moyen des composants de liaison (27) ;
l'insertion et la liaison des entretoises diagonales (13) au moyen des composants de liaison (27).

2. Procédé selon la revendication 1, dans lequel les composants de liaison (27) sont conçus et déformés dans leur géométrie extérieure lors de la liaison des composants de charpente (5) de sorte que, lors de la liaison des composants de charpente (5), ils sont élargis sur une surface périphérique (41) traversant les ouvertures de liaison (39), de manière à remplir entièrement et sans jeu les ouvertures de liaison (39), et la surface périphérique (41) élargie exerce ainsi une pression agissant dans une direction radiale vers l'extérieur sur des bords intérieurs des ouvertures de liaison (39).

3. Procédé selon la revendication 1 ou 2, dans lequel les composants de liaison sont des rivets, en particulier des boulons de rivet aveugles (43) à haute résistance mécanique, ou sont formés avec un manchon (59) et au moins un cône (61) logé dans le manchon (59) et pouvant être déplacé par rapport au manchon (59).

4. Procédé selon l'une des revendications précédentes, dans lequel les composants de liaison (27) sont formés et déformés par rapport à leur géométrie extérieure de manière à remplir entièrement et sans jeu les ouvertures de liaison (39) qu'ils traversent, de sorte qu'ils positionnent les ouvertures de liaison (39) les unes par rapport aux autres avec une tolérance inférieure à 0,3 mm lors de la liaison des composants de charpente (5).

5. Procédé selon l'une des revendications précédentes, dans lequel toutes les entretoises transversales (11), toutes les entretoises diagonales (13) et tous les montants (15) de la charpente (3) sont fabriqués chacun en série et de construction identique.

6. Procédé selon l'une des revendications précédentes, dans lequel les entretoises transversales (11), les entretoises diagonales (13) et les montants (15) sont constitués de feuilles de tôle.

7. Procédé selon l'une des revendications précédentes, dans lequel les membrures supérieures (7) et les membrures inférieures (9) sont configurées et fabriquées sur mesure.

8. Procédé selon l'une des revendications précédentes, dans lequel les membrures supérieures (7) et les membrures inférieures (9) sont réalisées avec des tubes carrés.

9. Procédé selon l'une des revendications précédentes, dans lequel des composants de charpente (5) individuels à prévoir sont composés d'une pluralité de sous-composants (31).

10. Procédé selon la revendication 9, dans lequel les sous-composants (31) des composants de charpente (5) à prévoir sont assemblés entre eux par un soudage ne supportant pas de charge ou un sertissage avant la liaison des composants de charpente (5).

11. Procédé selon l'une des revendications précédentes, dans lequel les composants de charpente (5) à prévoir et/ou les sous-composants (31) des composants de charpente (5) à prévoir sont reliés entre eux par une liaison enfichable (32) ne supportant pas de charge avant la liaison des composants de charpente (5) au moyen des composants de liaison (27).

12. Procédé selon l'une des revendications précédentes, dans lequel les membrures supérieures (7) et/ou les membrures inférieures (9) doivent être composées d'une pluralité de sous-segments (31), chaque sous-segment (31) présentant des ouvertures de liaison (39) et les sous-segments (31) étant reliés au moyen des composants de liaison (27).

13. Procédé selon la revendication 12, dans lequel les sous-segments (31) sont assemblés au niveau ou à proximité de la position de montage à l'intérieur de l'ouvrage.

14. Procédé selon l'une des revendications précédentes, dans lequel au moins un élément d'un groupe constitué par un bloc de rails, des parties de bride d'une chambre d'entraînement et des parties de bride d'une station de tension est en outre installé dans l'installation de transport de personnes par liaison aux composants de charpente (5) de la charpente (3) au moyen des composants de liaison (27).
